# EUROPEAN PATENT SPECIFICATION

(11) **EP 1 712 431 B1**
(45) Date of publication and mention of the grant of the patent: **08.06.2011**
(21) Application number: 06007708.8
(22) Date of filing: 12.04.2006
(51) Int. Cl.: B60R 21/233

(54) **Airbag and airbag apparatus**
Airbag und Airbagvorrichtung
Airbag et dispositif d'airbag

(30) Priority: 15.04.2005 JP 2005117729
(43) Date of publication of application: 18.10.2006
(73) Proprietor: TAKATA CORPORATION, Minato-ku, Tokyo 106-8510 (JP)
(72) Inventor: Abe, Kazuhiro Takata Corp., Tokyo 106-8510 (JP)
(74) Representative: Banzer, Hans-Jörg

(56) References cited:
- EP-A- 1 442 944
- EP-A- 1 574 403
- DE-A1- 3 829 368
- JP-A- 2002 308 039
- US-A1- 2003 006 596
- US-B1- 6 610 000

## Description

The present invention relates to an airbag and an airbag apparatus for protecting a vehicle occupant by means of an expansion thereof in an emergency, such as a car crash or the like.

### Background Art

Hitherto, an airbag apparatus that protects a vehicle occupant by means of an expansion of a main body of an airbag by ejecting gas from an inflator, which operates in an emergency such as a car crash, an overturn of the car, or the like, is known. For example, Japanese Unexamined Patent Application Publication No. 1-311930 describes an example of the airbag apparatus provided with a driver's airbag that protects a driver.

The airbag apparatus is provided with an airbag having an outside gas bag and an inside gas bag. An inner part of the airbag being separated by means of the outside gas bag is partitioned into a first chamber at a center of the airbag and a second chamber at a periphery of the first chamber by means of the inside gas bag. The gas flows into the second chamber from the first chamber through a continuous opening and when the inflator operates, the first chamber is expanded first, and the second chamber is serially expanded.

DE 3 829 368 A1 discloses an airbag system with an outer airbag and an inner airbag according to the preamble of claim 1 and a method for manufacturing an airbag according to the preamble of claim 12. The airbags are inflated simultaneously either by separate gas generators or by a common gas generator. The outer airbag is designed such that the gas flows out of the airbag approximately 100 ms after a crash, whereas the gas remains in the inner airbag approximately 10 s such that the inner airbag may serve as a protection in case of subsequent deceleration and the like following the initial crash. The inner airbag has a smaller volume than the outer airbag.

From document EP 1 442 944 A1 an airbag and airbag apparatus is known wherein the airbag comprises a front panel disposed at a vehicle occupant side and a rear panel disposed at a side opposite to the vehicle occupant side. An airbag main body is formed by means of combining each of peripheral edge portions of the front panel and the rear panel. An inner panel is provided disposed so as to partition an inside space of the airbag main body into a first chamber comprising an opening for receiving an inflator provided in the rear panel and a second chamber provided in a manner so as to surround the first chamber. The inflator inflates the second chamber via the first chamber.

### Problems to be Solved by the Invention

However, in the above-described heretofore known art, there has been a possibility such that an expansion of the second chamber at a periphery side of the first chamber in a radial direction is brought to be later than that of the first chamber, and that both the first chamber and the second chamber are not expanded and developed in a well-balanced manner.

Accordingly, an object of the present invention is to provide an art for developing the first chamber and the second chamber in the airbag, inner part of which is partitioned into the first chamber and the second chamber, in a well-balanced manner.

### Means for Solving the Problems

According to the invention, this object is achieved by an airbag as defined in claim 1, an airbag apparatus as defined in claim 13, and a method for manufacturing an airbag as defined in claim 15. The dependent claims define preferred and advantageous embodiments of the invention.

To achieve the above-mentioned object, the first invention is characterized in that an airbag includes a front panel disposed at a vehicle occupant side of an airbag main body, a rear panel disposed at a side opposite to the vehicle occupant side, the airbag main body formed by means of combining each of peripheral edge portions of both the front panel and the rear panel, and an inner panel disposed so as to partition inside space of the airbag main body into a first chamber including an opening for penetrating an inflator (hereinafter, an opening for penetrating an inflator is referred to as "for-inflator opening") provided in the rear panel, and a second chamber provided in a manner so as to surround the first chamber, in which the inner panel is disposed in a manner such that a volume V1 of the first chamber is determined to be smaller than a volume V2 of the second chamber when the airbag main body is brought to completion of development resulting from introduction of a fluid from the inflator.

In the first invention of the present invention, the volume V1 of the first chamber positioned at a side of an opening for the inflator, (center side) of the airbag main body is determined to be smaller than the volume V2 of the second chamber positioned at a periphery side of the first chamber when the airbag main body is brought to the completion of the development. Thereby, the airbag can be configured such that the first chamber and the second chamber tend to be expanded and developed toward a vehicle occupant side after the second chamber side is expanded in a radial direction earlier than the first chamber when the airbag is expanded. Accordingly, the vehicle occupant can be protected in a state that both of the first chamber and the second chamber are expanded in a well-balanced manner.

In the first invention, the inner panel is disposed in a manner so as to satisfy a condition to be within 0.03 < V1/V2 < 0.3.

Accordingly, a volume ratio of the volume V1 of the first chamber and the volume V2 of the second chamber can be concretely specified and thereby, a structure in which the volume V2 of the second chamber is brought to be larger than the volume V1 of the first chamber at the completion of the expansion and the development can be securely realized.

The first invention is further characterized in that in the first invention, the inner panel is disposed in a manner such that the volume V1 of the first chamber is determined to be smaller than the volume V2 of the second chamber when a time from not less than 20 msec to not more than 40 msec has passed after an ignition of the inflator is turned on, at the completion of the development of the airbag main body.

Accordingly, a structure in which the volume V2 of the second chamber is brought to be larger than the volume V1 of the first chamber at a standard completion of an expansion and the development can be securely realized.

The second invention is characterized in that in the first invention, the inner panel is disposed in a manner so as to satisfy a condition to be within 0.05 < V1/V2 < 0.25.

Accordingly, a structure, in which the volume V2 of the second chamber is brought to be larger than the volume V1 of the first chamber at the completion of the expansion and the development, can be securely realized.

The third invention is characterized in that an airbag apparatus includes an inflator blowing out a pressurized fluid and an airbag, in which the airbag includes a front panel disposed at a vehicle occupant side, a rear panel disposed at a side opposite to the vehicle occupant side, an airbag main body formed by means of combining each of peripheral edge portions of the front panel and the rear panel, and an inner panel disposed so as to partition inside space of the airbag main body into a first chamber including a for-inflator opening for an provided in the rear panel and a second chamber provided in a manner so as to surround the first chamber, and in which the inner panel is disposed in a manner such that the volume V1 of the first chamber is determined to be smaller than the volume V2 of the second chamber when the airbag main body is brought to the completion of the development resulting from introduction of a fluid from the inflator.

The volume V2 of the second chamber positioned at a periphery side of the first chamber is determined to be greater than the volume V1 of the first chamber positioned at a side of the for-inflator opening (center side) of the airbag main body when the airbag main body is brought to the completion of the development resulting from introduction of a fluid from the inflator. Thereby, the airbag can be configured such that the first chamber and the second chamber tend to be expanded and developed toward a vehicle occupant side after the second chamber side is expanded in a radial direction earlier than the first chamber when the airbag is expanded. Accordingly, the vehicle occupant can be protected in a state that both the first chamber and the second chamber are expanded in a well-balanced manner.

### Advantages

According to the present invention, a vehicle occupant can be protected in a state that both a first chamber and a second chamber are expanded and developed in a well-balanced manner.

### Brief Description of the Drawings

FIG. 1 is a cross-section illustrating an airbag apparatus having an airbag for a driver's seat in an automobile when the airbag is brought to completion of development relevant to an embodiment with respect to the present invention;
FIG. 2 is an exploded perspective view illustrating the airbag apparatus;
FIG. 3 is an explanatory view explaining weaving line directions of a front panel and an inner panel;
FIG. 4 is a graph showing a relationship between passage of time after an ignition of an inflator is turned on and a relative value of the volumes of each of a first chamber, a second chamber, and a total of the first and second chambers;
FIG. 5 is a comparative chart showing the relationship of FIG. 4, by value;
FIG. 6 is a graph showing a relationship between a passage of time after the ignition of the inflator for each of the sizes of the airbags is turned on and the volumes of the first chamber and the second chamber;
FIG. 7 is a cross-section illustrating the airbag and the airbag apparatus with respect to the first variation;
FIG. 8 is an exploded perspective view illustrating the airbag apparatus of FIG. 7;
FIG. 9 is a cross-section illustrating the airbag apparatus with respect to the second variation;
FIG. 10 is a cross-section illustrating the airbag apparatus with respect to the third variation;
FIG. 11 is an exploded perspective view illustrating the airbag apparatus of FIG. 10;
FIG. 12(a) is a plan view illustrating another structural example of a first inner panel, shown in FIG. 11, with respect to the fourth variation, and FIG. 12(b) is an exploded perspective view of each of the first inner panel and a second inner panel;
FIG. 13 is an exploded perspective view of the first inner panel and the second inner panel with respect to the fifth variation;
FIG. 14 is a cross-section of the airbag apparatus illustrating an example of a guide member with respect to the sixth variation;
FIG. 15 is an exploded perspective view of a main part of the airbag apparatus, shown in FIG. 14;
FIG. 16 is a cross-section of the airbag apparatus illustrating another example of the guide member, shown in FIG. 14, with respect to the seventh variation; and
FIG. 17(a) is a conceptual illustration with respect to the embodiment of the present invention, and FIGs. 17(b) through 17(f) are conceptual illustrations of the airbag with respect to the eighth variation through twelfth variation.

### Best Mode for Carrying Out the Invention

An embodiment of the present invention will be explained below, referring to the drawings.

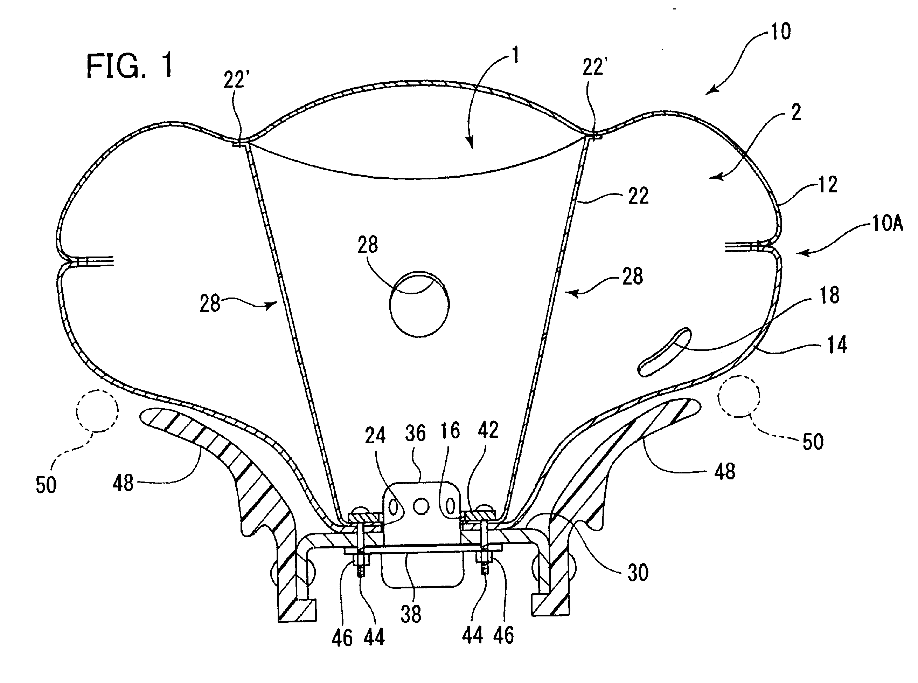

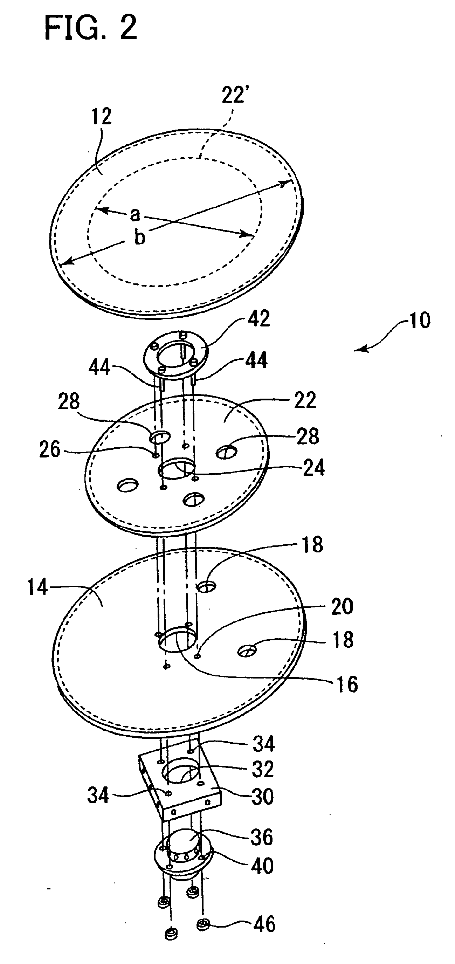

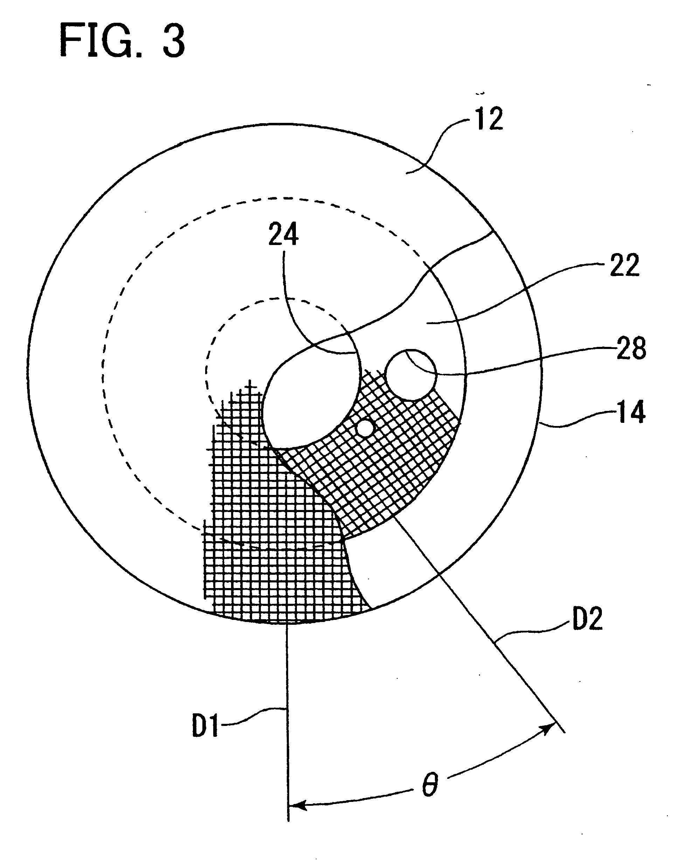

FIG. 1 is a cross-section illustrating an airbag apparatus having an airbag 10 for a driver's seat in an automobile when the airbag 10 is brought to completion of development with respect to an embodiment, FIG. 2 is an exploded perspective view illustrating the airbag apparatus, and FIG. 3 is an explanatory view explaining weaving line directions of a front panel 12 and an inner panel 22.

In FIGs. 1 through 3, the airbag 10, a retainer 30 for attaching the airbag 10, and an inflator 36 for supplying fluid into the airbag 10 to cause the airbag 10 to be expanded and developed, are illustrated.

At a center of the retainer 30, an inflator attaching opening 32 is formed and a plurality of (four in number) bolt insertion holes 34 are formed around the retainer 30.

A flange 38 is formed at an outer periphery of the inflator 36 and four bolt insertion holes 40 for attaching the inflator 36 to the retainer 30 are formed in the flange 38.

The airbag 10 is composed of a front panel 12 disposed at a vehicle occupant side, a rear panel 14 disposed at a side opposite to the vehicle occupant, an airbag main body 10A formed by means of stitching peripheral edge portions of each of the front panel 12 and the rear panel 14 together, and an inner panel 22 provided for partitioning an inside space of the airbag main body 10A into a first chamber 1 including a for-inflator opening 16 provided in the rear panel 14, and a second chamber 2, provided in a manner so as to surround the first chamber 1.

Each of the front panel 12, the rear panel 14, and the inner panel 22 are formed of woven cloth (refer to FIG. 2), and the front panel 12 and the rear panel 14, the diameters of which are identical with each other, are formed into a bag-shape by means of stitching both of the outer peripheral portions thereof together. The bag-shaped stitched portion has a circular shape revolving along an outer periphery of the front panel 12 and the rear panel 14. In addition, the circular shape in a flatly developed state of the front panel 12 and the rear panel 14 has a predetermined diameter b.

In the rear panel 14, the opening 16 for an inflator and a venthole 18 are provided. The airbag 10 is expanded and developed by means of supplying gas from the inflator to an inside of the airbag 10 through the for-inflator opening 16. Further, around the for-inflator opening 16 of the rear panel 14, four bolt insertion holes 20 (refer to FIG. 2) are formed.

The inner panel 22 is disposed in an approximately concentric manner with the front panel 12 and the rear panel 14, and a peripheral edge portion of the inner panel 22 is stitched to a middle portion between a center portion and a peripheral edge portion of the front panel 12. The stitched portion (stitch line) 22' is formed into a circular shape having a diameter a.

Further, at a center of the inner panel 22, a for-inflator opening 24 disposed in an approximately concentric manner with the for-inflator opening 16 of the rear panel 14 is provided, and the for-inflator openings 16 and 24 have approximately the same diameter. A peripheral edge portion of the for-inflator opening 24 is overlapped with a peripheral edge portion of the for-inflator opening 16 of the rear panel 14 and is further overlapped with the peripheral edge portion of the inflator attaching opening 32 of the retainer 30. Furthermore, around the for-inflator opening 24 of the inner panel 22, bolt insertion holes 26 to be overlapped with the bolt insertion holes 20 of the rear panel 14 are disposed.

Moreover, in the inner panel 22, a plurality of (four in number in this embodiment) inner ventholes 28 are disposed at even intervals in an area between a peripheral edge portion and a center portion of the inner panel 22, and the first chamber 1 in the airbag main body 10A is allowed to be communicated with the second chamber 2 through the inner venthole 28. A sum of the opening areas of these inner ventholes 28 is from 1.4% to 10% of an area (namely, the area inside the stitched portion 22') of a face of the inner panel 22 facing the first chamber 1.

Further, the inner venthole 28 is disposed at a position whose phase in a peripheral direction of the airbag main body 10A is displaced from that of the venthole 18, formed in the rear panel 14 and thereby, the inner venthole 28 is configured not to face the venthole 18 of the rear panel 14 when the airbag is expanded. Accordingly, the gas that has flowed into the second chamber 2 from the first chamber 1 of the airbag main body 10A through the inner venthole 28 is prevented from directly moving straight and being discharged from the airbag main body 10A through the venthole 18 without resistance.

Furthermore, the inner venthole 28 and the venthole 18 may be disposed at positions such as that the distance from the center of the airbag main body 10A to the inner venthole 28 in a radial direction, and the distance from the center of the airbag main body 10A to the venthole 18 in a radial direction are different, so that the inner venthole 28 and the venthole 18 do not face each other. It is natural to say that both of the phase in the peripheral direction and the position in the radial direction of the inner venthole 28 and the venthole 18 of the airbag main body 10A can be different.

In addition, the rear panel 14 and the inner panel 22 are fixed to the retainer 30 by fixing the peripheral edge portion of the for-inflator opening 24 of the inner panel 22 and that of the for-inflator opening 16 of the rear panel 14 to the retainer 30 through the bolt insertion holes 26 and 20. Consequently, the peripheral edge portion of the for-inflator opening 24 of the inner panel 22 is combined with the peripheral edge portion of the for-inflator opening 16 of the rear panel 14 and an outer peripheral edge portion of the inner panel 22 is combined with the front panel 12 by means of the stitched portion 22'.

Percentage a/bx100 (%) of a diameter "a" of the stitched portion 22', at which an outer peripheral portion of the inner panel 22 is stitched with the front panel 12 (hereinafter referred to as stitch diameter), and a stitch diameter "b" of a portion at which an outer peripheral edge portions of the front panel 12 and the rear panel 14 are stitched together, is corresponsive to a stitch diameter, in which a volume ratio, V1/V2 of a volume V1 of the first chamber 1 and a volume V2 of the second chamber 2 is from about 3% to about 30% when the airbag main body 10A is brought to the completion of the development thereof, to be described later in detail.

Here, for base cloth of the aforementioned front panel 12 and the rear panel 14, a material, which is relatively light in weight and small in size when it is folded, is preferable to use. For example, the base cloth of the front panel 12 and the rear panel 14 is preferable to have the thickness of 235 to 400 dtex (decitex). Further, the base cloth for use in the inner panel 22 is preferable to have both the thickness and strength greater than that of the base cloth for use in the front panel 12 and the rear panel 14. Accordingly, the inner panel 22 can sufficiently endure a stress from the airbag main body 10A at a time of expansion, even by single piece thereof. However, the material having a thickness equal to that of the base cloth for use in the front panel 12 or the rear panel 14 may be used for the base cloth for use in the inner panel 22. In this case, the inner panel 22 can be provided with sufficient strength by means of attaching a patch or the like that serves as a reinforcement, to the peripheral edge portion of the for-inflator opening 24 or the inner venthole 28. The thickness of the base cloth for use in the inner panel 22 is preferable to be from about 235 to about 470 dtex.

Further, an intersection angle θ between the weaving line direction of the front panel 12 and that of the rear panel 14 both formed of the woven cloth (in this example, the intersection angle between a warp D1 of the front panel 12 and the warp D2 of the inner panel 22) can be determined to be from about 20° to about 40°, for example (refer to FIG. 3). As a result, combination force, by which the inner panel 22 and the front panel 12 are combined, can be brought to be extremely strong.

The airbag 10 can be manufactured by means of following process, for example.

Preliminarily, the inner panel 22 is concentrically overlapped with an inside face (to be disposed at an inside of the airbag main body 10A when completed) of the front panel 12, first, and the outer peripheral edge portion of the inner panel 22 is circularly stitched in the middle between the peripheral edge portion and the middle portion of the front panel 12 at the stitch diameter "a" (The stitched portion 22' is formed by means of stitch work.)

Next, the outside faces (to be disposed at an outside of the airbag main body 10A when completed) of the front panel 12 and the rear panel 14 are overlapped in a manner so as to face each other, and each of the outer peripheral edges thereof is circularly stitched in diameter "b" to form a bag-shaped body.

Then, the inner panel 22 is passed through the for-inflator opening 16 of the rear panel 14 so that the inner panel 22 comes to an inside of the bag-shaped body by means of reversing the front panel 12 and the rear panel 14. Thereby, the airbag 10, in which the mutual stitch portions (seam) are positioned inside thereof is completed.

Further, depending on a spec of the airbag 10 or a fashion for combining the front panel 12 and the rear panel 14, or the like, each of the outer peripheral edge portions of the front panel 12 and the rear panel 14 may be stitched together in a state that the inside faces of the front panel 12 and the rear panel 14 are facing each other in a manner such that the inner panel 22 is sandwiched between the front panel 12 and the rear panel 14 when stitching the front panel 12 and the rear panel 14. In the thus stitched airbag 10, a trouble for reversing the front panel 12 and the rear panel 14 can be saved and the airbag can be manufactured with ease.

In addition, when the retainer 30 is attached to the airbag 10 manufactured in the above-described fashion to configure the airbag apparatus, the below mentioned process can be applied.

Firstly, the peripheral edge portions of the for-inflator openings, 16 and 24 of the respective rear panel 14 and the inner panel 22 are attached to a position between a pressing ring 42 and an upper face of the peripheral edge portion of the inflator attaching opening 32 of the retainer 30 in a sandwiched manner, after the inflator 36 is inserted into the inflator attaching opening 32 until the flange 38 is brought to be in contact with a rear face of the retainer 30. Secondly, four stud bolts 44 are inserted into bolt insertion holes 26, 20, 34, and 40 of the pressing ring 42, and nuts 46 are screwed on tip ends of the stud bolts 44. Thus, the inner panel 22, the airbag 10, and the inflator 36 are fixed to the retainer 30. Thirdly, the airbag 10 is folded and a module cover 48 is attached to the retainer 30 in a manner so as to cover the folded body of the airbag 10. The airbag apparatus, shown in FIG. 1, is thus configured. The airbag apparatus is disposed at an inside of a steering wheel (not shown) of a motor vehicle.

Operation and effect of the thus configured present embodiment will be explained below.

In the airbag apparatus mentioned above, the gas (fluid) in the airbag 10 is instantaneously ejected by means of operation of the inflator 36, in an emergency, such as a car crash or the like. The airbag 10 pushes open the module cover 48 by means of the ejected gas and protects the vehicle occupant by developing in a room of the motor vehicle. Further, at this moment, the airbag 10 is configured such that, the first chamber 1 is immediately expanded by means of the ejected gas from the inflator 36 first, and then the gas in the first chamber 1 flows into the second chamber 2 through the inner venthole 28, and the second chamber 2 is expanded after a slight delay from the expansion of the first chamber 1 in a continuous operation to be brought to the completion of the development of the airbag 10.

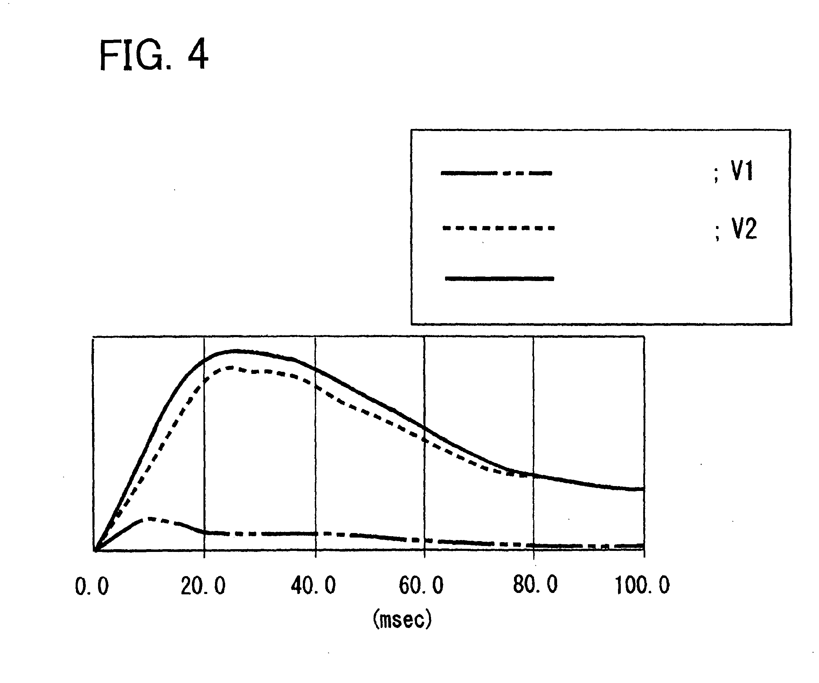

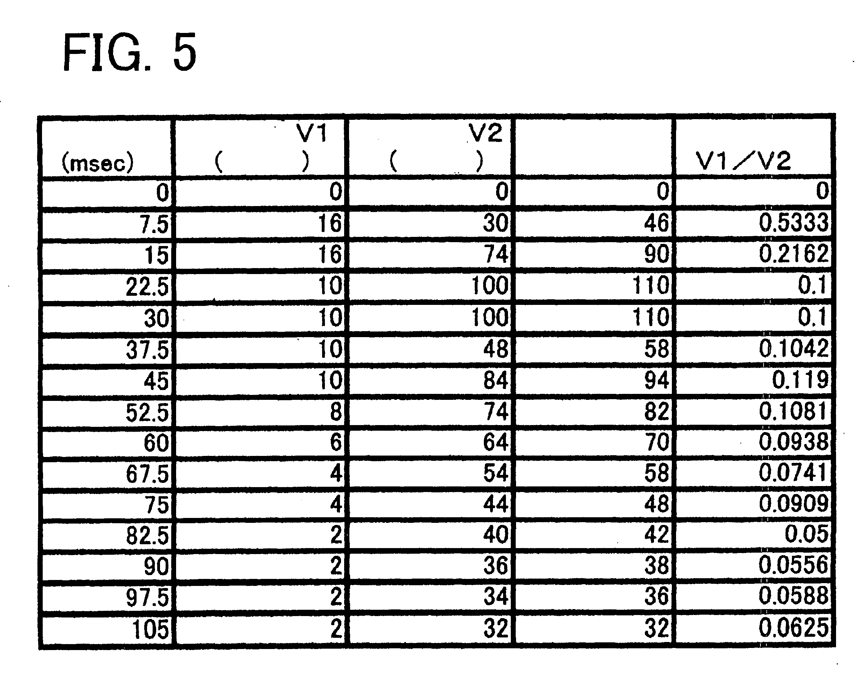

A concrete example of a measured time series change of each of the volumes V1 and V2 of the first chamber 1 and the second chamber 2, respectively, and a total volume of both of the chambers 1 and 2 (V1+V2) for the time passage after an ignition for the inflator 36 is turned on, will be explained referring to FIGs. 4 and 5. FIG. 4 is a graph showing a relationship between time after the ignition of the inflator is turned on and a relative value of the volumes of each of the first chamber 1, the second chamber 2, and the total of the first and the second chambers, 1 and 2, and FIG. 5 is a comparative chart showing the relationship of FIG. 4, by value.

As is clear from FIGs. 4 and 5, the development of the first chamber 1 is brought to the completion after 7.5 msec to 15 msec has passed from the beginning of the expansion, and the volume V1 reaches a maximum value 16 (relative value), and that of the second chamber 2 is brought to the completion after 22.5 to 30 msec has passed from the beginning of the expansion, and the volume V2 reaches a maximum value 100 (relative value). As a result, the total volume, V1 + V2 of both of the first and second chambers, 1 and 2 reaches a maximum value, from 90 to 110 (relative value) after 15 to 30 msec has passed from the beginning of the expansion. Specifically, in this example, when the time, from not less than 20 msec to not more than 40 msec has passed after the ignition for the inflator 36 is turned on, it is found that the volume V1 (=10) of the first chamber 1 tends to become extremely smaller than the volume V2 (=100) of the second chamber 2, and that a structure, in which the volume V2 of the second chamber 2 becomes greater than the volume V1 of the first chamber 1, is securely realized at a standard completion time for the expansion and development. When the configuration mentioned above is expressed by a volume ratio of the first chamber 1 and the second chamber 2, the volume ratio is sufficient to be within the following condition: 0.03 < V1/V2 < 0.3, and more preferably, to be within the following condition: 0.05 < V1/V2 < 0.25. As mentioned above, in the present embodiment, the airbag main body 10A is configured to be partitioned by means of the inner panel 22 such that the volume V2 of the second chamber 2 positioned at a periphery side (in a radial direction) becomes large, in advance of the volume V1 of the first chamber 1 positioned at the side of the for-inflator opening 16 (center side) of the airbag main body 10A when the airbag 10 is brought to the completion of the expansion and the development. Consequently, there can be a tendency that the second chamber 2 is expanded in a radial direction in advance, and after some time lag, the first and second chambers, 1 and 2 are brought to be expanded and developed toward a vehicle occupant side after the second chamber 2 is expanded in a radial direction earlier than the first chamber 1. Accordingly, the vehicle occupant can be protected in a state that both of the first chamber 1 and the second chamber 2 of the airbag 10 are expanded and developed in a well-balanced manner.

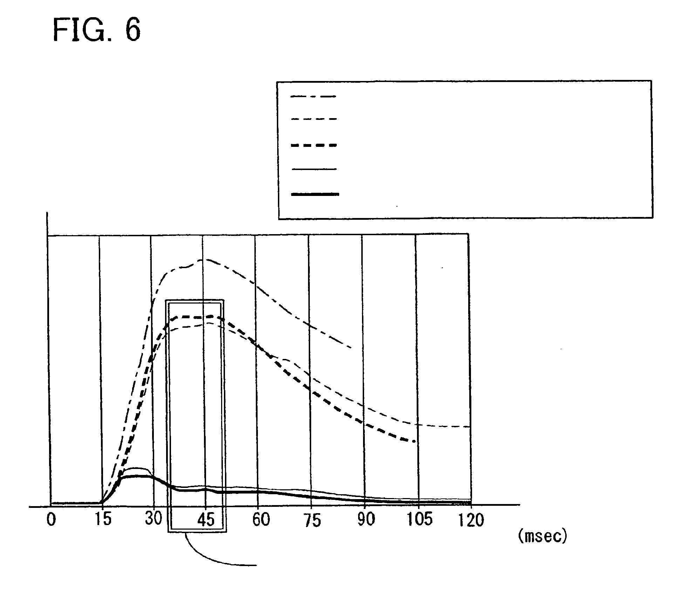

FIG. 6 is a graph concretely expressing the above-described effect in contrast with a normal airbag (an airbag without being partitioned into two chambers).

In FIG. 6, a curve of a dashed line indicates an example of a "normal airbag". Further, a curve of a bold solid line for "inner chamber: 2-chamber-type large airbag" indicates an example of the first chamber 1 of a large sized airbag in the airbags 10 of the present embodiment provided with the first chamber 1 and the second chamber 2, and a curve of a bold broken line for "outer chamber: 2-chamber-type large airbag" indicates an example of the second chamber 2 of the large sized airbag in the airbags 10 of the present embodiment. Furthermore, a curve of a thin solid line for "inner chamber: 2-chamber-type small airbag" indicates an example of the first chamber 1 of a small-sized airbag in the airbags 10 of the present embodiment, and a curve of a thin broken line for "outer chamber: 2-chamber-type small airbag" indicates an example of the second chamber 2 of the small-sized airbag in the airbags 10 of the present embodiment.

As illustrated in FIG. 6, the volume of the normal airbag reaches the maximum value, from 30 msec to 45 msec after the ignition for the inflator 36 is turned on. In contrast, there is a tendency in the small sized and large sized airbag 10 (= the "small airbag" and the "large airbag") of the present embodiment such that, after the volume V1 of each of the first chambers (having the volume smaller than the volume V2 of each of the second chambers) reaches the maximum value, from 20 msec to 30 msec after the ignition for the inflator 36 is turned on, the volume V2 of the second chamber (having the volume about six times as large as the volume V1 of each of the first chambers) increases after some delay, and reaches the maximum value of the volume, from 40 msec to 50 msec after the ignition for the inflator 36 is turned on. In addition, after each of the volumes V1 and V2 exceeds the maximum values, each of the volumes V1 of each of the first chambers of the small and the large airbags 10 gradually decreases along with the time, and approaches the initial volume value in about 110 msec. Similarly, each of the volumes V2 of each of the second chambers immediately is started to decrease and, in about 90 msec, reaches close to one half of the maximum values. According to such a tendency, the airbag 10 is prevented from expanding and developing into the side of the vehicle occupant before the airbag 10 is not sufficiently enlarged in the radial direction and thereby, the vehicle occupant can be protected in a state that both of the first chamber 1 and the second chamber 2 are expanded and developed in a well-balanced manner.

As described above, the airbag 10 has a configuration of a two-chamber structure, in which an inside of the airbag main body 10A is partitioned by means of the inner panel 22, and the volume V2 of the second chamber 2 is formed larger than the volume V1 of the first chamber 1, however, the airbag 10 is not limited to the aforementioned configuration and various kinds of configurations may be obtained.

For example, the airbag of the present invention is applicable of, for example, an airbag for use in a passenger airbag and other kinds of types of the airbag for protecting human body (for example, an airbag for use in a rear seat of the motor vehicle, the airbag for head portion protection, the airbag for side portion protection, and the airbags for protecting crews and occupants of trains, airplanes, and the like), other than that for use in the driver's seat airbag for the motor vehicle.

Further, the present invention is available for various variations within an area that does not deviate from the purport and a technical area. Hereinbelow, such variations will be explained. In addition, the same numerals denote the same elements in the above-described embodiment and explanation therefor may be appropriately omitted.

### First Variation

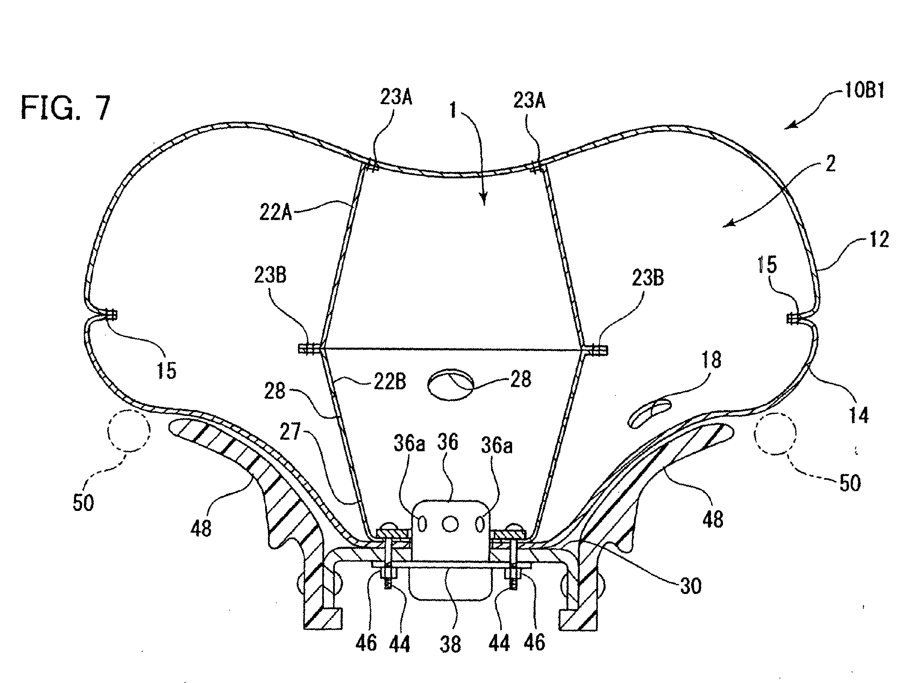

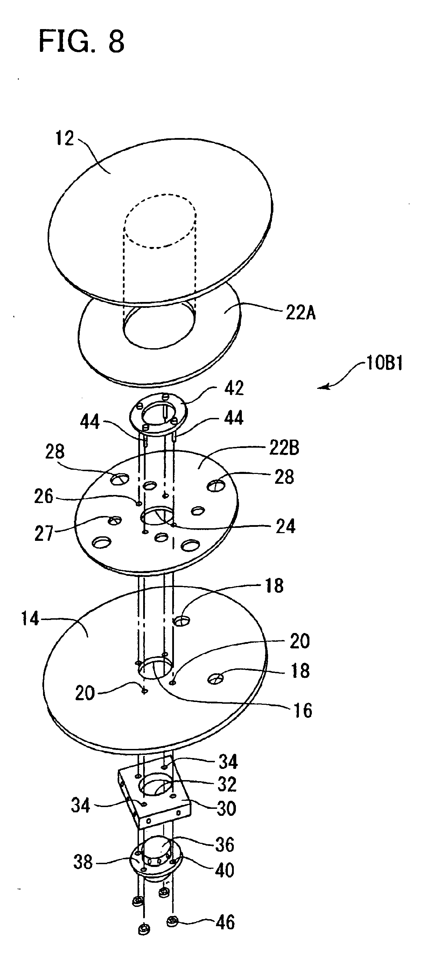

FIG. 7 is a cross-section illustrating the airbag apparatus with respect to the first variation, and FIG. 8 is an exploded perspective view illustrating the airbag apparatus of FIG. 7.

In FIGs. 7 and 8, an airbag 10B1 with respect to the first variation is provided with a first inner panel 22A and a second inner panel 22B inside thereof. The first and second inner panels 22A and 22B are disposed in an approximately concentric manner with the front panel 12 and the rear panel 14 and outer peripheral edge portions of which are stitched with each other by means of a seam 23B formed from a thread or the like. An inner peripheral edge portion (a peripheral edge portion of a tip end side of the first inner panel 22A when the airbag 10B1 is in the completion of the expansion and the development) of the first inner panel 22A at the front panel 12 side is stitched onto a middle portion between a center portion and a peripheral portion of the front panel 12 by a seam 23B formed from a thread or the like.

At a center portion (a portion to be positioned at a rear end side of the second inner panel 22B when the airbag 10B1 is in the completion of the expansion and the development) of the second inner panel 22B at the rear panel 14 side, the for-inflator opening 24 (refer to FIG. 8) which is disposed in a substantially concentric manner with the for-inflator opening 16 of the rear panel 14 is provided. Those for-inflator openings, 16 and 24 have approximately the same diameter. Further, around the for-inflator opening 24 of the second inner panel 22B, bolt insertion holes 26 that overlap with the bolt insertion holes 20 of the rear panel 14 are disposed.

In the second inner panel 22B, relatively close to the outer peripheral edge portion thereof, the inner venthole 28 is provided, and a continuous opening 27 for allowing the first chamber 1 to be communicated with the second chamber 2 is provided at an inner peripheral side from the inner venthole 28. Further, the inner venthole 28 may be provided in the first inner panel 22A.

A peripheral edge portion of the for-inflator opening 24 of the second inner panel 22B is overlapped with a peripheral edge portion of the for-inflator opening 16 of the rear panel 14 and is further overlapped with a peripheral edge portion of the inflator attaching opening 32 of the retainer 30. In addition, the peripheral edge portions of the for-inflator openings, 24 and 16 are fixed to the retainer 30 by means of stud bolts 44 inserted through the bolt insertion holes 26 and 20. Consequently, the peripheral edge portion of the for-inflator opening 24 of the second inner panel 22B is connected to the peripheral edge portion of the for-inflator opening 16 of the rear panel 14, and each of the peripheral edge portions of the first and second inner panels 22A and 22B is connected together. Further, the inner peripheral edge portion of the first inner panel 22A is connected to the front panel 12.

An inner part of the airbag 10B1 is partitioned into the first chamber 1 at a center of the airbag 10B1, and the second chamber 2 surrounding the first chamber 1 by means of the first and second inner panels 22A and 22B.

The continuous opening 27 is formed on an extension line in a gas blowing-out direction of the inflator 36, to be described later, being disposed in the first chamber 1 through the for-inflator openings, 16 and 24, namely, at a position facing gas blowing-out openings 36a of the inflator 36.

In the first variation, as shown in FIG. 8, four continuous openings 27 and the four inner ventholes 28 are respectively disposed at even intervals in a peripheral direction of the airbag 1OB1. In addition, those continuous openings 27 and inner ventholes 28 are deviated in phase in a peripheral direction around the center of the airbag 10B1.

Further, a patch and the like for reinforcement may be attached to the peripheral edge portions of the openings for the inflator, 16 and 24, the continuous opening 27, the venthole 18, and the inner venthole 28.

The inflator 36 has an approximately cylindrical shape and the gas blowing-out openings 36a are formed around a side peripheral face of the tip end side in a shaft direction of the inflator 36. In the first variation, four gas blowing-out openings 36a are disposed at even intervals in the peripheral direction of the inflator 36. The inflator 36 is configured such that the gas is blown-out from the gas blowing-out openings 36a in a radial direction. Further, the flange 38 for fixing the inflator 26 protrudes from a side peripheral face of a middle part (rear end side from the gas blowing-out openings 36a) in the shaft direction of the inflator 36, and bolt insertion holes 40 are provided in the flange 38. The tip end of the inflator 36 is inserted into the inflator attaching opening 32 of the retainer 30.

When the airbag 10B1 is attached to the retainer 30, the rear panel 14 and the peripheral edge portions of the for-inflator openings, 16 and 24 of the second inner panel 22B are pressed onto the peripheral edge portion of the inflator attaching opening 32 of the retainer 30. The tip end of the inflator 36 inserted into the inflator attaching opening 32 is inserted inside the first chamber 1 through the for-inflator openings, 16 and 24. Each of the gas blowing-out openings 36a provided at the tip end side of the inflator 36 respectively faces each of the continuous openings 27 of the second inner panel 22B.

At this moment, the stud bolts 44 of the pressing ring 42 are inserted into the bolt insertion holes 26, 20, 34, and 40 and the nuts 46 are screwed onto the tip end thereof. The second inner panel 22B, the airbag 10B1, and the inflator 36 are fixed to the retainer 30, accordingly. Then, the airbag apparatus is built up by folding the airbag 10B1, and attaching the module cover 48 to the retainer 30 in a manner so as to cover the folded body of the airbag 10B1.

In the airbag 10B1, because the continuous opening 27 that allows the first chamber 1 to be communicated with the second chamber 2 is disposed on the extension line in a gas blowing-out direction of the inflator 36 being disposed in the first chamber 1, namely, at the position facing the gas blowing-out opening 36a of the inflator 36, the gas is blown-out toward the continuous opening 27 through the gas blowing-out opening 36a when the inflator 36 is operated. Therefore, the gas from the inflator 36 is, as shown in FIG. 7, also directly supplied to the second chamber 2 through the continuous opening 27. Thereby, the second chamber 2 is brought to be expanded earlier.

### Second Variation

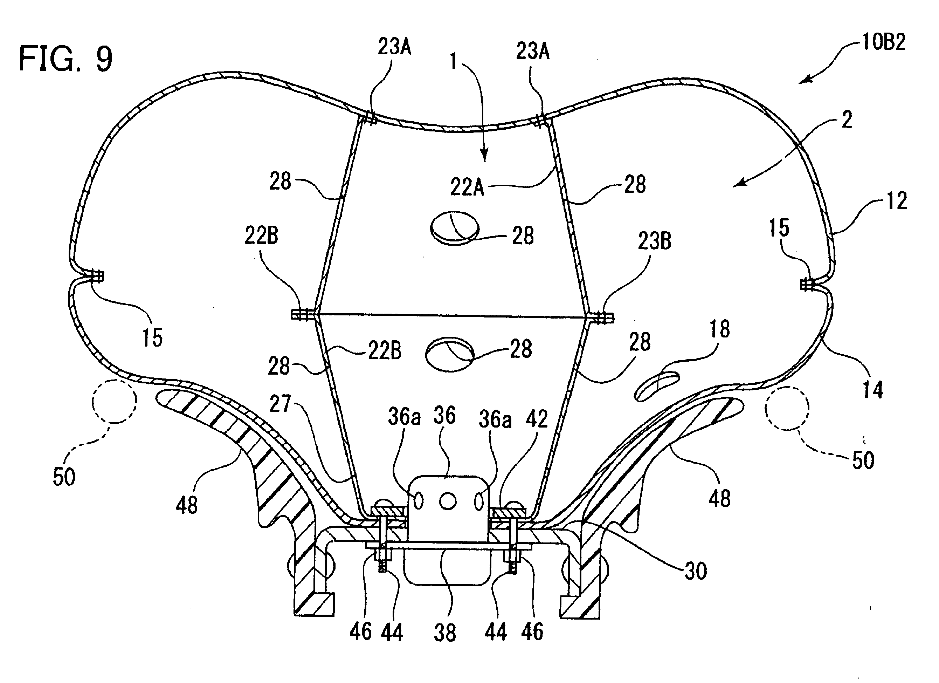

FIG. 9 is a cross-section illustrating the airbag apparatus with respect to the second variation. An airbag 10B2, shown in FIG. 9, is the airbag, both of the first inner panel 22A and the second inner panel 22B of which are provided with the inner venthole 28, and the other configuration of that is the same as that of the airbag 10B1 in FIGs. 7 and 8.

### Third Variation

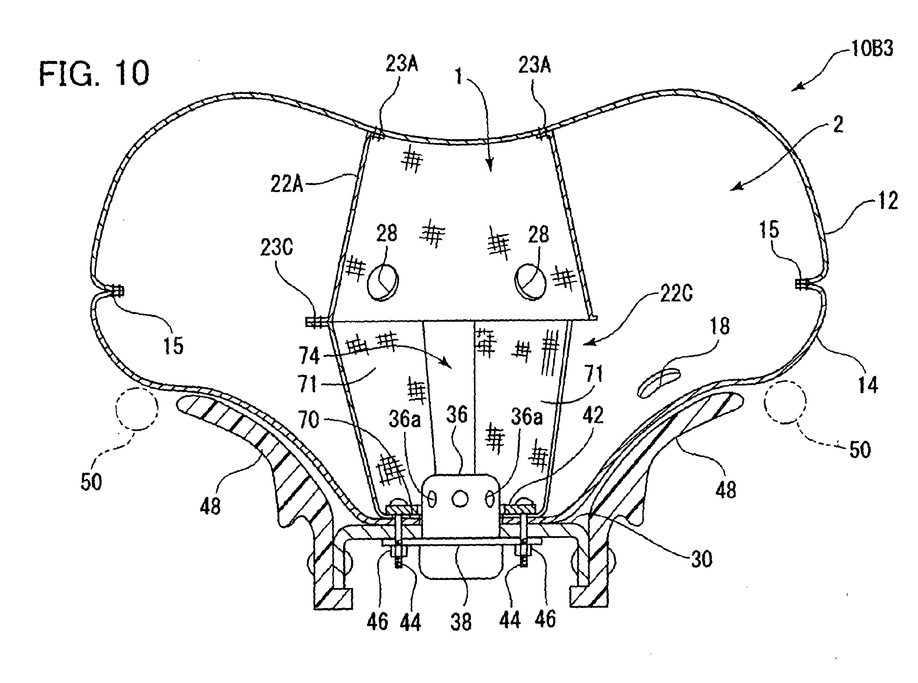

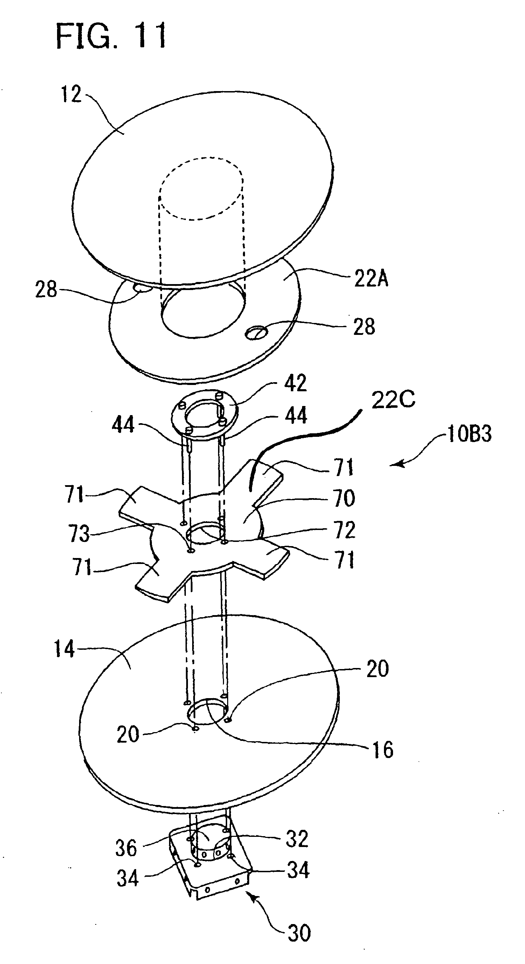

FIG. 10 is a cross-section illustrating the airbag apparatus with respect to the third variation, and FIG. 11 is an exploded perspective view illustrating the airbag apparatus of FIG. 10. The same numerals denote the same elements.

In FIGs. 10 and 11, an airbag 10B3 is composed of the front panel 12 and the rear panel 14 that form an outline of the airbag 10B3, the first inner panel 22A and the second inner panel 22C that partition the inner part of the airbag 10B3 into the first chamber 1 and the second chamber 2 surrounding the first chamber 1. In the third variation, the second inner panel 22C is provided with a ring-shaped center portion 70 that is overlapped with the peripheral portion of the for-inflator opening 16 of the rear panel 14, and four strap-shaped portions 71 protruding in a radial direction from an outer periphery of the center portion 70. The strap-shaped portions 71 are disposed in a peripheral direction around the center portion 70 at even intervals, and bolt insertion holes 73, to which the stud bolts 44 of the pressing ring 42 are inserted are disposed around a center opening (for-inflator opening) 72 of the center portion 70.

Further, even another front panel 12, another rear panel 14, and another first inner panel 22A are also the round shaped panels in the third variation and each of the peripheral edge portions of both of the front panel 12 and the rear panel 14 is stitched by means of a seam 15. An inner peripheral portion of the first inner panel 22A is stitched on a middle portion between the center portion of the front panel 12 and the peripheral edge portion thereof by means of a seam 23A. In the third variation, the inner venthole 28 is formed in the first inner panel 22A.

The center portion 70 of the second inner panel 22C is disposed in a concentric manner with the first inner panel 22A and each of the tip end sides of the strap-shaped portions 71 are stitched onto the outer peripheral edge portion of the first inner panel 22A by means of the seam 23C. Each of the tip end sides of each of the strap-shaped portions 71 is disposed in a peripheral direction of the first inner panel 22A at even intervals. In the airbag 10B3, clearances between the strap-shaped portions 71 serve as continuous portions 74 allowing the first chamber 1 to be communicated with the second chamber 2.

The center portion 70 of the second inner panel 22C is overlapped with the peripheral portion of the for-inflator opening 16 of the rear panel 14 and fixed to the peripheral portion of the inflator attaching opening 32 of the retainer 30 by means of the pressing ring 42. In addition, the tip end side (gas blowing-out portion) of the inflator 36 that is fit into the inflator attaching opening 32 is inserted into the first chamber 1 through each of the for-inflator openings, 16 and 72. In the third variation, four gas blowing-out openings 36a are also formed at the side peripheral face of the tip end side of the inflator 36 and each of the gas blowing-out openings 36a faces each of the continuous portions 74.

Other configuration of the airbag 10B3 and the airbag apparatus having the airbag 10B3 is the same as that of FIGS. 7 and 8, to be described above and the detailed explanation is omitted.

### Fourth Variation

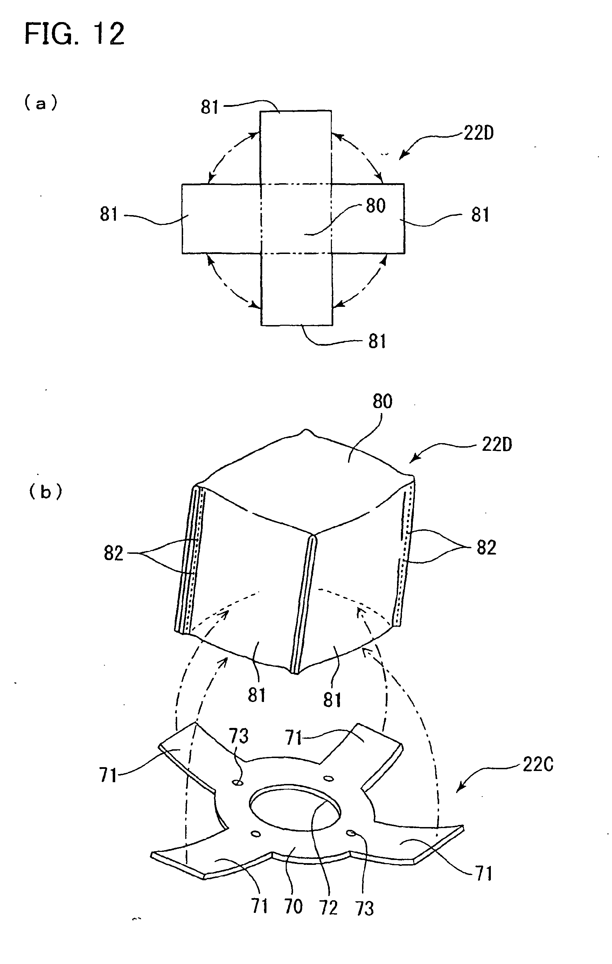

FIG. 12(a) is a plan view illustrating another structural example of a first inner panel, shown in FIG. 11, with respect to the fourth variation, and FIG. 12(b) is an exploded perspective view of each of the first inner panel and a second inner panel.

In FIGs. 12(a) and 12(b), in the fourth variation, a first inner panel 22D is formed of cross-shaped woven cloth having a center portion 80 combined with a front panel 12 (not shown) and four belt-shaped portion 81 extending in four directions from the center portion 80. In the woven cloth, each of the belt-shaped portions 81 is bent up toward the rear panel 14 side (not shown) from the base, and each of the side portions of the belt-shaped portions 81 neighboring each other are stitched together. Thereby, the woven cloth is formed into a bottomless bag-shape, as shown in FIG. 12(b). Further, numeral 82 denotes the seam of the stitch work. An inside space of the bag-shaped first inner panel 22D serves as the first chamber.

In the fourth variation, a tip end side of each of the strap-shaped portions 71 of the second inner plate 22C is stitched onto a tip end side end portion of each of the belt-shaped portions 81, as shown in 12(b). The second inner panel 22C has the same configuration as that of the third variation in FIGs. 10 and 11, to be described above.

In the first inner panel 22D, because the first inner panel 22D is also formed of the center portion 80 and the cross-shaped woven cloth having the four belt-shaped portions 81 extending in four directions from the center portion 80, the entire area of the first inner panel 22D is small compared to the first inner panel formed of round shaped woven cloth. Therefore, an amount of woven cloth used for the inner panel 22D is suppressed when the inner panel 22D is manufactured and the cost of a material for the inner panel 22D is reduced. Therefore, the resource saving can be attempted.

### Fifth variation

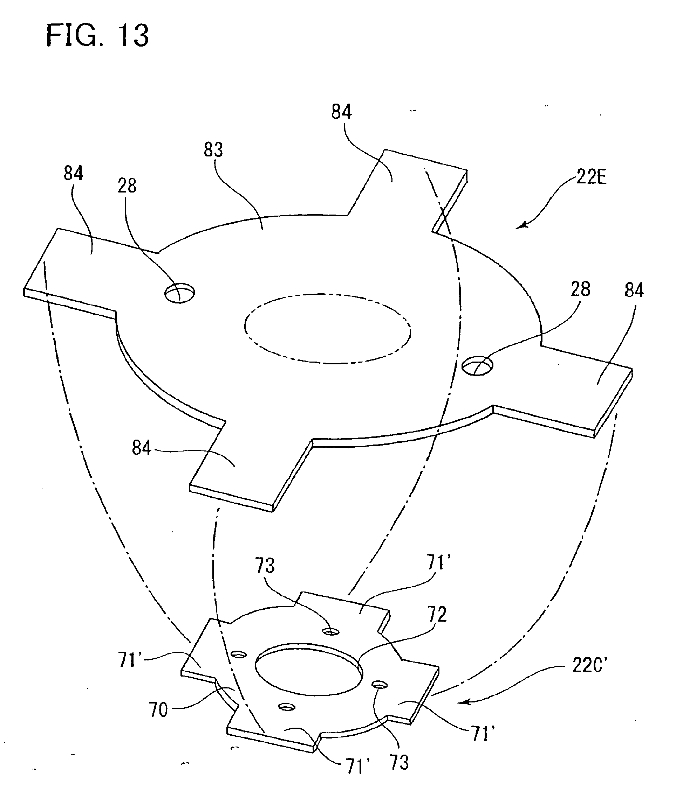

FIG. 13 is an exploded perspective view of the first inner panel and the second inner panel with respect to the fifth variation.

In FIG. 13, in the fifth variation, a continuous portion for allowing the first chamber to be communicated with the second chamber is formed in a manner so as to extend across the first inner panel and the second inner panel. In addition, the first inner panel 22E is composed of a round shaped main body portion 83, to be combined with a front panel 12 (not shown) at a center, and four strap-shaped portions 84 protruding in a radial direction from an outer periphery of the main body portion 83, and the strap-shaped portions 84 are disposed in a peripheral direction of the main body portion 83 at even intervals. A chain double-dashed line circulating around a center portion of the main body portion 83 indicates a line to be stitched when the center portion of the main body portion 83 and the front panel 12 are combined. In addition, in the vicinity of a middle portion between the center portion of the main body portion 83 and an outer periphery, the inner venthole 28 is formed.

In the fifth variation, the second inner panel 22C' is also composed of a ring-shaped center portion 70 to be overlapped with a peripheral edge portion of the opening for inflator of the rear panel 14 (not shown), and four strap-shaped portions 71' protruding in a radial direction from an outer periphery of the center portion 70, and the strap-shaped portions 71' are disposed in a peripheral direction of the center portion 70 at even intervals. Further, the strap-shaped portion 71' at the fifth variation is formed to have a length shorter than the strap-shaped portion 71 in the third variation, shown in FIGs. 10 through 12(b).

In the fifth variation, each of the strap-shaped portions 84 of the first inner panel 22E is combined with each of the strap-shaped portions 71' of the second inner panel 22C' by means of the stitch work, or the like. In addition, each of the clearances between respective combined bodies of the strap-shaped portions 71' and 84 serves as continuous portions for allowing the first chamber to be communicated with the second chamber.

### Sixth Variation

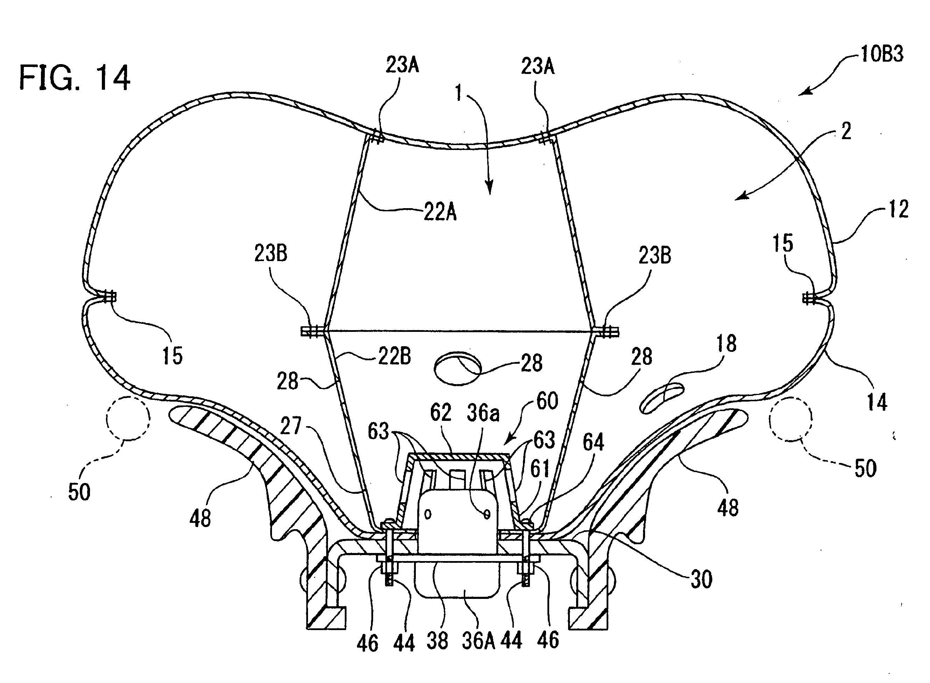

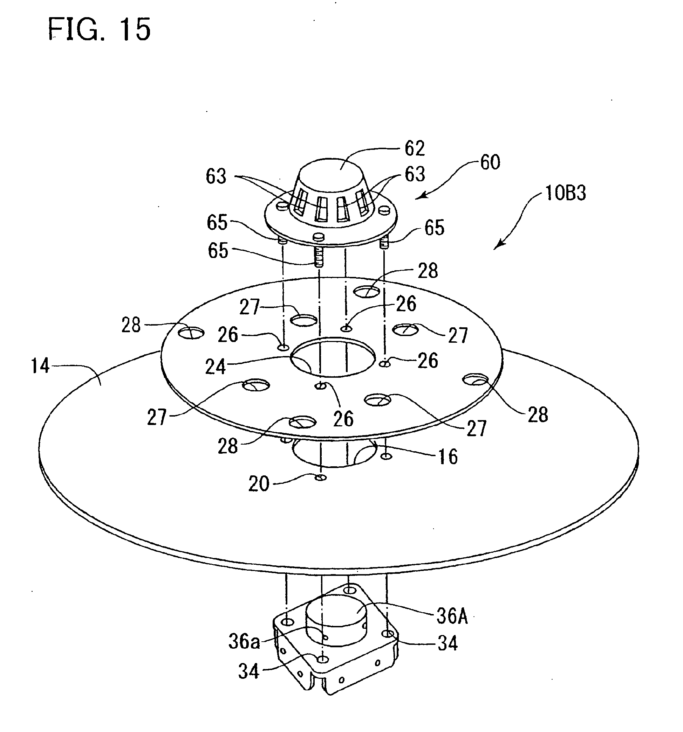

FIG. 14 is a cross-section of the airbag apparatus illustrating an example of a guide member with respect to the sixth variation, and FIG. 15 is an exploded perspective view of a main part of the airbag apparatus, shown in FIG. 14.

In FIGs. 14 and 15, in the sixth variation, a guide member 60 for guiding the gas from an inflator 36A to the continuous opening 27 for allowing the first chamber 1 to be communicated with the second chamber 2 is provided in the airbag 10B3. In addition, the airbag 10B3 has the same configuration as the airbag 10 in FIGs. 7 and 8, to be described earlier.

In the sixth variation, the inflator 36A is composed of the gas blowing-out openings 36a at the side peripheral face of a tip end side of the inflator 36A, and the tip end side of the inflator 36A is disposed in the first chamber 1 through the for-inflator openings, 16 and 24 (shown in FIG. 15). Similar to the inflator 36, to be described earlier, the inflator 36A is also configured to blow out the gas from the gas blowing-out openings 36a in a radial direction. However, in the sixth variation, the phase of the gas blowing-out openings 36a and that of the continuous openings 27 are deviated around the center of the airbag 10B3 and each of the continuous opening 27 is not positioned on an extension line in a gas blowing-out direction from the gas blowing-out opening 36a. Other configuration of the inflator 36A is the same as that of the inflator 36 of the airbag apparatus in FIGs. 7 and 8.

The guide member 60 is composed of a ring-shaped surrounding wall portion 61 that surrounds a side periphery of a tip end side of the inflator 36A, a ceiling portion 62 that closes a front end side (vehicle occupant side) of the surrounding wall portion 61, a plurality of gas discharging outlet 63 formed at the surrounding wall portion 61, a pressing ring 64 provided around a rear end portion of the surrounding wall portion 31, and a plurality of stud bolts protruding from the rear side of the pressing ring 64. Space surrounded by the surrounding wall portion 61 and the ceiling portion 62 serves as a gas receiving chamber 66 for receiving the gas from the inflator 36A. The plurality of gas discharging outlets 63 are disposed in a peripheral direction of the surrounding wall portion 61 at even intervals and the gas in the gas receiving chamber 66 is discharged from the plurality of gas discharging outlets 63 in a radial direction.

In the guide member 60, the pressing ring 64 is overlapped with a peripheral edge portion of the for-inflator opening 24 of the second inner panel 22B from inside of the first chamber 1. Further, a plurality of the stud bolts 65 are inserted through each of the bolt insertion holes of the second inner panel 22B, the rear panel 14, the retainer 30, and the flange 38 of the inflator 36A, and a plurality of the nuts 46 are respectively screwed on the stud bolts 65. Thus, the guide member 60 is fixed to the retainer 30 together with the second inner panel 22B, the rear panel 14, and the inflator 36A. At this moment, the tip end side of the inflator 36A is disposed in the gas receiving chamber (not shown) through the retainer 30, the rear panel 14, and each of the for-inflator openings of the second inner panel 22B.

In the sixth variation, in the guide member 60, the continuous opening 27 is positioned on an extension line in a discharging direction of the gas from a part of the gas discharging outlet 63, and on the other extension line in a discharging direction of the gas from a remaining part of the gas discharging outlet 63, a panel portion of the second inner panel 22B is positioned in a state of the airbag 10B3 to be expanded.

The guide member 60 is formed of metal or heat-resistant synthetic resin, however, the material of the guide member 60 is not limited to the same. Other configuration of the airbag apparatus is identical of the airbag apparatus in FIGs. 7 and 8, to be described above.

When the inflator 36A is operated at a time of vehicle collision or the like in an airbag apparatus having such a configuration, the gas blows out from the inflator 36A into the gas receiving chamber 66 of the guide member 60, and then, the gas is discharged from the gas receiving chamber 66 into the first chamber 1 of the airbag 10B3 through each of the gas discharging outlets 63. At this moment, because the gas is discharged from a part of the gas discharging outlets 63 to each of the continuous openings 27, the gas is also supplied into the second chamber 2 directly through each of the continuous openings 27. Thereby, the second chamber 2 is brought to be expanded at an early time. Further, because the gas discharged from the remaining gas discharging outlet 63 collides with the panel portion of the second inner panel 22B, the gas is mainly stays in the first chamber 1. Accordingly, the first chamber 1 is also expanded at the early time.

In the airbag apparatus, even when the continuous opening 27 for allowing the first chamber 1 to be communicated with the second chamber 2 cannot be disposed on the extension line in the gas blowing-out direction from the gas blowing-out opening 36a of the inflator 36A, the gas from the inflator 36A can be guided to the continuous opening 27 by means of the guide member 60 and can be supplied to the second chamber 2, directly.

### Seventh Variation

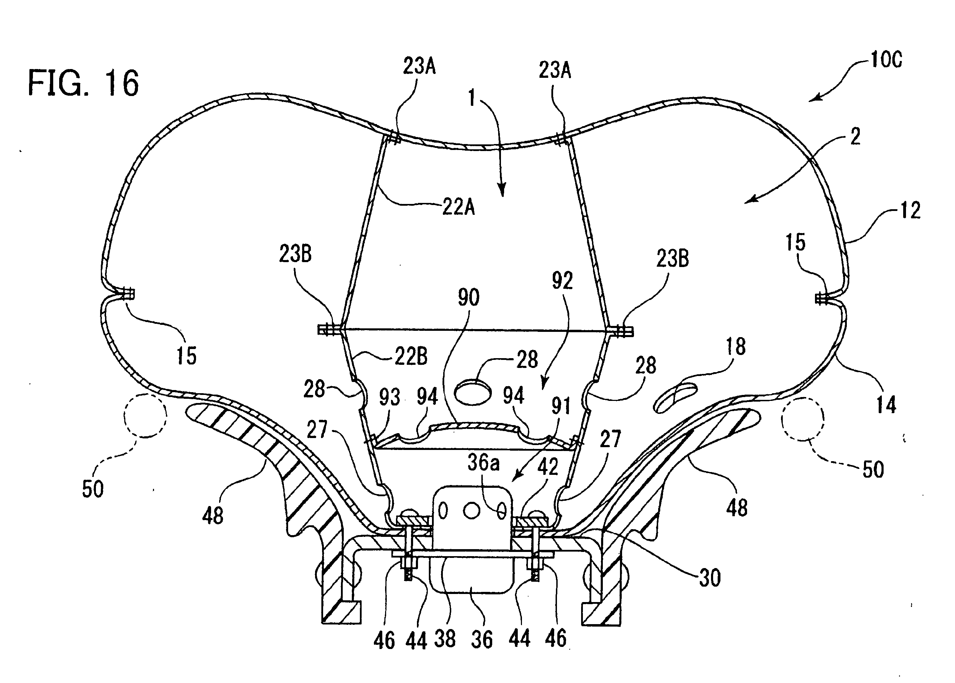

FIG. 16 is a cross-section of the airbag apparatus illustrating another example of the guide member, shown in FIG. 14, with respect to the seventh variation.

In FIG. 16, in the seventh variation, an inner part of the first chamber 1 of the airbag 10C is partitioned into a small chamber 91 at the inflator 36 side and a large chamber 92 at the front panel 12 side by means of an inner panel 90 for partitioning, which serves as a guide member (hereinafter, "inner panel 90 for partitioning" is referred to as "for-partitioning inner panel 90"). Further, the airbag 10C has the same configuration as that of the airbag 10 in FIGs. 1 and 2, except that the for-partitioning inner panel 90 is provided.

The for-partitioning inner panel 90 is formed of round shaped woven cloth and disposed at an inside of the second inner panel 22B (inside of the first chamber 1) in a concentric manner with the second inner panel 22B, in the seventh variation. A peripheral edge portion of the for-partitioning inner panel 90 is stitched at a portion between an inner periphery side (at the side of the for-inflator opening 24) and an outer periphery side of the second inner panel 22B by means of a seam 93. In addition, as illustrated in FIG. 16, in the seventh variation, the inner venthole 28 is formed at a portion relatively close to the outer peripheral edge portion of the second inner panel 22B, and the continuous opening 27 for allowing the first chamber 1 to be communicated with the second chamber 2 is formed at the inner periphery side from the inner venthole 28. A peripheral edge portion of the for-partitioning inner panel 90 is stitched at a portion between the inner venthole 28 and the continuous opening 27.

The small chamber 91 is positioned between the for-partitioning inner panel 90 and the inflator 36, and the large chamber 92 is positioned between the for-partitioning inner panel 90 and the front panel 12. The continuous opening 27 faces the small chamber 91 and the inner venthole 28 faces the large chamber 92.

In the above-mentioned inner panel 90, a gas discharging outlet 94 for discharging the gas from the small chamber 91 to the large chamber 92 is provided. A shape, a disposition, an opening area and the like of the gas discharging outlet 94 are determined corresponding to an inner volume or the like, of the large chamber 92, and there is no specific limitation.

In an airbag apparatus provided with the airbag 10C having such a configuration when the inflator 36 is operated to blow out the gas at a time of car crash, the gas is guided into the small chamber 91 first, and then respectively distributed to the large chamber 92 and the second chamber 2 via the gas discharging outlet 94 and the continuous opening 27 from the small chamber 91. Thereby, both the large chamber 92 and the second chamber 2 are brought to be expanded earlier.

### Eighth through Twelfth Variations

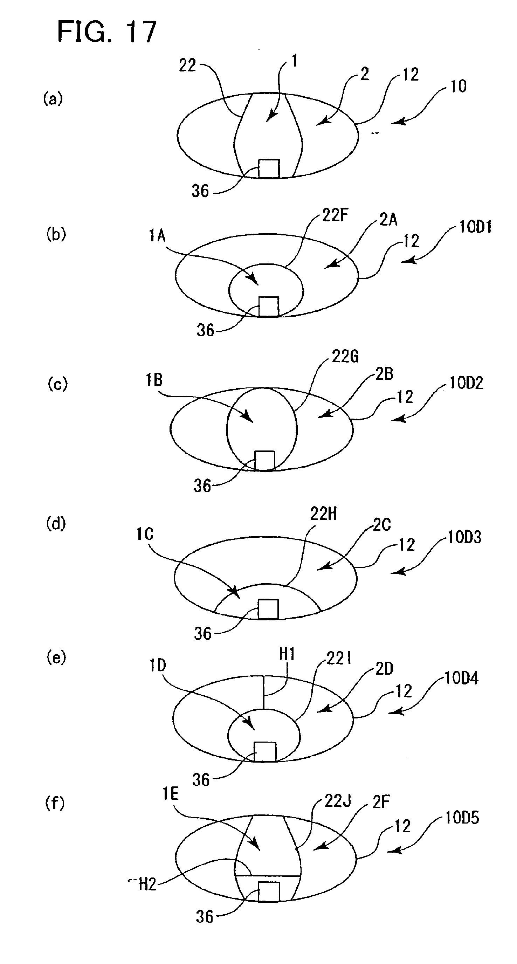

FIG. 17(a) is a conceptual illustration of the airbag with respect to the embodiment of the present invention, and FIGs. 17(b) through 17(f) are conceptual illustrations of the airbag with respect to the eighth variation through twelfth variation, illustrating the concept of the airbag in contrast to FIG. 17(a).

First, FIG. 17(a) is a conceptual illustration of the airbag with respect to the embodiment of the present invention relevant to FIG. 1, and the airbag 10 is partitioned into the first chamber 1 disposed at the center of the airbag 10 and the second chamber 2 disposed around the first chamber 1 by means of the inner panel 22 whose one end side is fixed to the fixing end of the inflator 36 or in the vicinity of the inflator 36, and the other end side is fixed to the front side of the airbag 10 to be in contact with the vehicle occupant, as described above.

FIG. 17(b) is a conceptual illustration of the airbag similar to FIG. 17(a) with respect to the eighth variation. An airbag 10D1, shown in FIG. 17(b), is partitioned into a first chamber 1A disposed at a center of the airbag 10D1 and a second chamber 2A disposed around the first chamber 1A by means of an airbag-shaped inner panel 22F of a separate body, and the inner panel 22F is fixed to only the fixing end of the inflator 36 side.

Further, FIG. 17(c) is a conceptual illustration of the airbag with respect to the ninth variation. An airbag 10D2, shown in FIG. 17(c), is partitioned into a first chamber 1B disposed at a center of the airbag 10D2 and a second chamber 2B disposed around the first chamber 1B by means of an airbag-shaped inner panel 22G of a separate body, and the inner panel 22G is fixed to the fixing end and the front side of the airbag 10 to be in contact with the vehicle occupant.

Furthermore, FIG. 17(d) is a conceptual illustration of the airbag with respect to the tenth variation. An airbag 10D3, shown in FIG. 17(d), is partitioned into a first chamber 1C disposed at the inflator 36 side and a second chamber 2C disposed around the first chamber 1C by means of an inner panel 22H. The second chamber 2C is disposed at the vehicle occupant side from the first chamber 1C and the fixing end of the inflator 36 is disposed in the first chamber 1C.

Moreover, FIG. 17(e) is a conceptual illustration of the airbag with respect to the eleventh variation. An airbag 10D4, shown in FIG. 17(e), is the airbag having basically the same configuration as that of the airbag 10D1, shown in FIG. 11(b). In addition, a vehicle occupant side of an inner wall of a second chamber 2D of the airbag 10D4 and the vehicle occupant side of an outer wall of an inner panel 22I that partitions the airbag 10D4 into a second chamber 2D and a first chamber 1D, are longitudinally combined by means of a hanging strap H1.

Still further, FIG. 17(f) is a conceptual illustration of the airbag with respect to the twelfth variation. An airbag 10D5, shown in FIG. 17(f), is the airbag having basically the same configuration as that of the airbag 10 of the embodiment of the present invention, shown in FIG. 17(a). In addition, both of the inner walls facing each other, of an inner panel 22J that partitions a second chamber 2F and a first chamber 1E of the airbag 10D5 are laterally combined by means of a hanging strap H2.

The present invention is also applicable for the configuration of the aforementioned eighth variation through twelfth variation and in any case, the same effect as that of the aforementioned embodiment can be obtained.

## Claims

1. An airbag comprising:
a front panel (12) disposed at a vehicle occupant side;
a rear panel (14) disposed at a side opposite to the vehicle occupant side;
an airbag main body (10A) formed by means of combining each of peripheral edge portions of the front panel (12) and the rear panel (14); and
an inner panel (22; 22A, 22B; 22A, 22C; 22D, 22C; 22E, 22C'; 22F-J) disposed so as to partition an inside space of the airbag main body (10A) into a first chamber (1) comprising an opening (16) for penetrating an inflator (36; 36A) provided in the rear panel (14), and a second chamber (2) provided in a manner so as to surround the first chamber (1),
wherein the inner panel is disposed in a manner such that a volume V1 of the first chamber (1) is determined to be smaller than a volume V2 of the second chamber (2) when the airbag main body (10A) is brought to completion of development resulting from introduction of a fluid from the inflator (36; 36A), **characterised in that** 0.03 < V1/V2 < 0.3, and and **in that** the inner panel is disposed in a manner such that the volume V1 of the first chamber (1) is determined to be smaller than the volume V2 of the second chamber (2) when a time from not less than 20 msec to not more than 40 msec has passed after an ignition of the inflator (36; 36A) is turned on, at the completion of the development of the airbag main body (10A).

2. The airbag according to Claim 1, wherein the inner panel (22; 22A, 22B; 22A, 22C; 22D, 22C; 22E, 22C'; 22F-J) is disposed in a manner so as to satisfy a condition to be within 0.05 < V1/V2 < 0.25.

3. The airbag according to either one of Claims 1 or 2, wherein a guide member (60) for guiding the fluid from the inflator (36) into the first chamber (1) is provided.

4. The airbag according to any one of Claims 1-3, wherein an inner part of the first chamber (1) is partitioned into a small chamber (91) at an inflator (36) side and a large chamber (92) at a front panel (12) side by means of another inner panel (90), which serves as a guide member (60) for guiding the fluid from the inflator (36) into the first chamber (1).

5. The airbag according to any one of Claims 1-4, wherein at least one venthole (28) is provided in the inner panel (22; 22A, 22B).

6. The airbag according to any one of Claims 1-5, wherein the inner panel consists of a first inner panel (22A; 22D; 22E) and a second inner panel (22B; 22C; 22C').

7. The airbag according to Claim 6, wherein
both of the first inner panel (22A) and the second inner panel (22B) are provided with at least one venthole (28) each.

8. The airbag according to Claim 6 or 7, wherein the second inner panel (22C) is provided with a ring-shaped center portion (70) that is overlapped with the peripheral portion of the opening (16) of the rear panel (14),
wherein several strap-shaped portions (71) protrude in a radial direction from an outer periphery of the center portion (70),
wherein an inner peripheral edge portion of the first inner panel (22A) at a front panel (12) side is stitched near a middle between a center and a peripheral portion of the front panel (12),
wherein the center portion (70) of the second inner panel (22C) is disposed in a concentric manner with the first inner panel (22A) and a tip end side of each of the strap-shaped portions (71) is stitched onto a outer peripheral edge portion of the first inner panel (22A).

9. The airbag according to Claim 6 or 7, wherein the first inner panel (22D) is provided with a center portion (80) combined with the front panel (12),
wherein several belt-shaped portions (81) extend from the center portion (80),
wherein each of the belt-shaped portions (81) is bent up toward a rear panel (14) from the center portion (80) and each side portion of the belt-shaped portions (81) neighboring each other are stitched together forming a bottomless bag-shape,
wherein the second inner panel (22C) is provided with a ring-shaped center portion (70) that is overlapped with a peripheral portion of the opening (16) of the rear panel (14),
wherein several strap-shaped portions (71) protrude in a radial direction from an outer periphery of the center portion (70),
wherein a number of belt-shaped portions (81) of the first inner panel (22D) is equal to a number of strap-shaped portions (71) of the second inner panel (22C),
wherein a tip end side of each of the strap-shaped portions (71) of the second inner panel (22C) is stitched onto a tip end side end portion of each of the belt-shaped portions (81).

10. The airbag according to Claim 6 or 7, wherein the first inner panel (22E) is provided with a round shaped main body portion (83) combined with the front panel (12),
wherein several strap-shaped portions (84) protrude in a radial direction from an outer periphery of the main body portion (83),
wherein the second inner panel (22C') is provided with a ring-shaped center portion (70) that is overlapped with a peripheral portion of the opening (16) of the rear panel (14),
wherein several strap-shaped portions (71') protrude in a radial direction from an outer periphery of the center portion (70),
wherein a number of strap-shaped portions (84) of the first inner panel (22E) is equal to a number of strap-shaped portions (71') of the second inner panel (22C'),
wherein each of the strap-shaped portions (84) of the first inner panel (22E) is combined with a corresponding one of the strap-shaped portions (71') of the second inner panel (22C').

11. An airbag apparatus comprising:
an inflator (36; 36A) blowing out a pressurized fluid; and
an airbag (10; 10B1-3; 10C; 10D1-5) according to any one of Claims 1-10.

12. A method for manufacturing an airbag, comprising the steps:
providing a front panel (12),;
providing a rear panel (14);
forming an airbag main body (10A) by combining peripheral edge portions of the front panel (12) and the rear panel (14); and
disposing an inner panel (22; 22A, 22B; 22A, 22C; 22D, 22C; 22E, 22C'; 22F-J) so as to partition an inside space of the airbag main body (10A) into a first chamber (1) comprising an opening (16) for penetrating an inflator (36; 36A) to be provided in the rear panel (14), and a second chamber (2) provided in a manner so as to surround the first chamber (1),
wherein the inner panel (22; 22A, 22B; 22A, 22C; 22D, 22C; 22E, 22C'; 22F-J) is disposed in a manner such that a volume V1 of the first chamber (1) is determined to be smaller than a volume V2 of the second chamber (2) when the airbag main body (10A) is brought to completion of development resulting from introduction of a fluid from the inflator (36; 36A), **characterised in that** 0.03 < V1/V2 < 0.3, and **in that** the inner panel is disposed in a manner such that the volume V1 of the first chamber (1) is determined to be smaller than the volume V2 of the second chamber (2) when a time from not less than 20 msec to not more than 40 msec has passed after an ignition of the inflator (36; 36A) is turned on, at the completion of the development of the airbag main body (10A).

13. The method according to Claim 12,
wherein the inner panel (22) is concentrically overlapped with an inside face of the front panel (12),
wherein an outer peripheral edge portion of the inner panel (22) is circularly combined near a middle between the peripheral edge portion and the center of the front panel (12),
wherein outside faces of the front panel (12) and the rear panel (14) are overlapped in a manner so as to face each other,
wherein each of the outer peripheral edges thereof is circularly combined to form a bag-shaped body,
wherein the inner panel (22) is passed through the opening (16) of the rear panel (14) so that the inner panel (22) comes to an inside of the bag-shaped body by means of reversing the front panel (12) and the rear panel (14).

14. The method according to Claim 13,
wherein the steps where each of the outer peripheral edges is circularly combined and the inner panel (22) is passed
through the opening (16) of the rear panel (14) are replaced by the following step in which each of the outer peripheral edge portions of the front panel (12) and the rear panel (14) are combined together in a state that the inside faces of the front panel (12) and the rear panel (14) are facing each other in a manner such that the inner panel (22) is sandwiched between the front panel (12) and the rear panel (14) when combining the front panel (12) and the rear panel (14).

15. The method according to Claim 13 or 14,
wherein the combining of two panels (12, 22; 12, 14) is performed by stitching.

16. The method according to any one of Claims 12-15,
where the method is adapted to manufacture an airbag as defined in claims 1-10.

## Patentansprüche

1. Airbag umfassend:
eine vordere Stoffbahn (12), welche an einer Seite eines Fahrzeuginsassen angeordnet ist;
eine hintere Stoffbahn (14), welche an einer der Seite des Fahrzeuginsassen gegenüberliegenden Seite angeordnet ist;
einen Airbag-Hauptkörper (10A), welcher durch Kombinieren von jeweiligen Umfangskantenabschnitten der vorderen Stoffbahn (12) und der hinteren Stoffbahn (14) ausgebildet ist; und
eine innere Stoffbahn (22; 22A, 22B; 22A, 22C; 22D, 22C; 22E, 22C'; 22F-J), welche derart angeordnet ist, dass sie einen Innenraum des Airbag-Hauptkörpers (10 A) in eine erste Kammer (1), welche eine Öffnung (16) zum Eindringen einer Aufblasvorrichtung (36; 36A), die in der hinteren Stoffbahn (14) vorhanden ist, umfasst, und eine zweite Kammer (2), welche in einer Weise vorhanden ist, dass sie die erste Kammer (1) umgibt, unterteilt,
wobei die innere Stoffbahn in einer Weise angeordnet ist, so dass ein Volumen V1 der ersten Kammer (1) derart festgelegt ist, dass es kleiner als ein Volumen V2 der zweiten Kammer (2) ist, wenn der Airbag-Hauptkörper (10A) als Ergebnis eines Einführens eines Fluids von der Aufblasvorrichtung (36; 36A) vollständig aufgeblasen worden ist,
**dadurch gekennzeichnet,**
**dass** 0,03 < V1/V2 < 0,3 ist, und
**dass** die innere Stoffbahn in einer Weise angeordnet ist, so dass das Volumen V1 der ersten Kammer (1) derart festgelegt ist, dass es kleiner als das Volumen V2 der zweiten Kammer (2) ist, wenn eine Zeitspanne von nicht weniger als 20 ms bis nicht mehr als 40 ms nach einer Zündung der Aufblasvorrichtung (36; 36A) beim Aufblasen des Airbag-Hauptkörpers (10A) vergangen ist.

2. Airbag nach Anspruch 1, **dadurch gekennzeichnet, dass** die innere Stoffbahn (22; 22A, 22B; 22A, 22C; 22D, 22C; 22E, 22C'; 22F-J) in einer Weise angeordnet ist, dass eine Bedingung 0,05 < V1/V2 < 0,25 erfüllt ist.

3. Airbag nach einem der Ansprüche 1 oder 2, **dadurch gekennzeichnet, dass** ein Führungsteil (60) zum Führen des Fluids von der Aufblasvorrichtung (36) in die erste Kammer (1) vorhanden ist.

4. Airbag nach einem der Ansprüche 1-3, **dadurch gekennzeichnet, dass** ein innerer Teil der ersten Kammer (1) bei einer Seite der Aufblasvorrichtung (36) in eine kleine Kammer (91) und bei einer Seite der vorderen Stoffbahn (12) in eine große Kammer (92) mittels einer anderen inneren Stoffbahn (90) unterteilt ist, welche als ein Führungsteil (60) zum Führen des Fluids von der Aufblasvorrichtung (36) in die erste Kammer (1) dient.

5. Airbag nach einem der Ansprüche 1-4, **dadurch gekennzeichnet, dass** zumindest ein Luftloch (28) in der inneren Stoffbahn (22; 22A, 22B) vorhanden ist.

6. Airbag nach einem der Ansprüche 1-5, **dadurch gekennzeichnet, dass** die innere Stoffbahn aus einer ersten inneren Stoffbahn (22A; 22D; 22E) und einer zweiten inneren Stoffbahn (22B; 22C; 22C') besteht.

7. Airbag nach Anspruch 6, **dadurch gekennzeichnet, dass** sowohl die erste innere Stoffbahn (22A) als auch die zweite innere Stoffbahn (22B) jeweils mit zumindest einem Luftloch (28) versehen sind.

8. Airbag nach Anspruch 6 oder 7,
**dadurch gekennzeichnet,**
**dass** die zweite innere Stoffbahn (22C) mit einem ringförmigen Mittelabschnitt (70) versehen ist, welcher den Umfangsabschnitt der Öffnung (16) der hinteren Stoffbahn (14) überlappt,
**dass** mehrere streifenförmige Abschnitte (71) in einer radialen Richtung von einem Außenumfang des Mittelabschnitts (70) hervorragen,
**dass** ein innerer Umfangskantenabschnitt der ersten inneren Stoffbahn (22A) bei einer Seite der vorderen Stoffbahn (12) in der Nähe einer Mitte zwischen einem Mittelabschnitt und einem Umfangsabschnitt der vorderen Stoffbahn (12) genäht ist,
**dass** der Mittelabschnitt (70) der zweiten inneren Stoffbahn (22C) in einer konzentrischen Weise zu der ersten inneren Stoffbahn (22A) angeordnet ist und eine Endseite jedes der streifenförmigen Abschnitte (71) auf einen äußeren Umfangskantenabschnitt der ersten inneren Stoffbahn (22A) genäht ist.

9. Airbag nach Anspruch 6 oder 7,
**dadurch gekennzeichnet,**
**dass** die erste innere Stoffbahn (22D) mit einem Mittelabschnitt (80), welcher mit der vorderen Stoffbahn (12) kombiniert ist, versehen ist,
**dass** sich mehrere gurtförmige Abschnitte (81) von dem Mittelabschnitt (80) erstrecken,
**dass** jeder der gurtförmigen Abschnitte (81) von dem Mittelabschnitt (80) zu einer hinteren Stoffbahn (14) nach oben gebogen ist und jeder Seitenabschnitt der gurtförmigen Abschnitte (81), welche nebeneinander liegen, zusammengenäht sind, um eine Taschenform ohne Boden auszubilden,
**dass** die zweite innere Stoffbahn (22C) mit einem ringförmigen Mittelabschnitt (70) versehen ist, welcher einen Umfangsabschnitt der Öffnung (16) der hinteren Stoffbahn (14) überlappt,
**dass** mehrere streifenförmige Abschnitte (71) in einer radialen Richtung von einem Außenumfang des Mittelabschnitts (70) hervorragen,
**dass** eine Anzahl der streifenförmigen Abschnitte (81) der ersten inneren Stoffbahn (22D) gleich einer Anzahl der streifenförmigen Abschnitte (71) der zweiten inneren Stoffbahn (22C) ist,
**dass** eine Endseite jedes der streifenförmigen Abschnitte (71) der zweiten inneren Stoffbahn (22C) auf einen Endabschnitt einer Endseite jedes der streifenförmigen Abschnitte (81) genäht ist.

10. Airbag nach Anspruch 6 oder 7,
**dadurch gekennzeichnet,**
**dass** die erste innere Stoffbahn (22E) mit einem rund geformten Hauptkörper-Abschnitt (83), welcher mit der vorderen Stoffbahn (12) kombiniert ist, versehen ist,
**dass** mehrere streifenförmige Abschnitte (84) in einer radialen Richtung von einem Außenumfang des Hauptkörper-Abschnitts (83) hervorragen,
**dass** die zweite innere Stoffbahn (22C') mit einem ringförmigen Mittelabschnitt (70) versehen ist, welcher einen Umfangsabschnitt der Öffnung (16) der hinteren Stoffbahn (14) überlappt,
**dass** mehrere streifenförmige Abschnitte (71') in einer radialen Richtung von einem Außenumfang des Mittelabschnitts (70) hervorragen,
**dass** eine Anzahl von streifenförmigen Abschnitten (84) der ersten inneren Stoffbahn (22E) gleich einer Anzahl von streifenförmigen Abschnitten (71') der zweiten inneren Stoffbahn (22C') ist,
**dass** jeder der streifenförmigen Abschnitte (84) der ersten inneren Stoffbahn (22E) mit einem entsprechenden der streifenförmigen Abschnitte (71') der zweiten inneren Stoffbahn (22C') kombiniert ist.

11. Airbag-Vorrichtung umfassend:
eine Aufblasvorrichtung (36; 36A), welche ein unter Druck stehendes Fluid nach außen bläst; und
einen Airbag (10; 10B1-3; 10C; 10D1-5) nach einem der Ansprüche 1-10.

12. Verfahren zur Herstellung eines Airbags, welches die Schritte umfasst:
Bereitstellen einer vorderen Stoffbahn (12);
Bereitstellen einer hinteren Stoffbahn (14);
Ausbilden eines Airbag-Hauptkörpers (10A), indem Umfangskantenabschnitte der vorderen Stoffbahn (12) und der hinteren Stoffbahn (14) kombiniert werden; und
Anordnen einer inneren Stoffbahn (22; 22A, 22B; 22A, 22C; 22D, 22C; 22E, 22C'; 22F-J) so, dass ein Innenraum des Airbag-Hauptkörpers (10A) in eine erste Kammer (1), welche eine Öffnung (16) zum Eindringen einer Aufblasvorrichtung (36; 36A), die in der hinteren Stoffbahn (14) vorhanden ist, umfasst, und eine zweite Kammer (2), welche in einer Weise vorhanden ist, dass sie die erste Kammer (1) umgibt, unterteilt wird,
wobei die innere Stoffbahn (22; 22A, 22B; 22A, 22C; 22D, 22C; 22E, 22C'; 22F-J) in einer Weise angeordnet ist, so dass ein Volumen V1 der ersten Kammer (1) derart festgelegt ist, dass es kleiner als ein Volumen V2 der zweiten Kammer (2) ist, wenn der Airbag-Hauptkörper (10A) als Ergebnis eines Einführens eines Fluids von der Aufblasvorrichtung (36; 36A) vollständig aufgeblasen worden ist,
**dadurch gekennzeichnet,**
**dass** 0,03 < V1/V2 < 0,3 ist, und
**dass** die innere Stoffbahn in einer Weise angeordnet ist, dass das Volumen V1 der ersten Kammer (1) derart festgelegt ist, dass es größer als das Volumen V2 der zweiten Kammer (2) ist, wenn eine Zeitspanne von nicht weniger als 20 ms bis nicht mehr als 40 ms nach einer Zündung der Aufblasvorrichtung (36; 36A) beim Aufblasen des Airbag-Hauptkörpers (10A) vergangen ist.

13. Verfahren nach Anspruch 12,
**dadurch gekennzeichnet,**
**dass** die innere Stoffbahn (22) eine Innenfläche der vorderen Stoffbahn (12) überlappt,
**dass** ein äußerer Umfangskantenabschnitt der inneren Stoffbahn (22) kreisförmig in der Nähe einer Mitte zwischen dem Umfangskantenabschnitt und der Mitte der vorderen Stoffbahn (12) kombiniert wird,
**dass** Außenflächen der vorderen Stoffbahn (12) und der hinteren Stoffbahn (14) in einer Weise überlappen, so dass sie sich gegenüberliegen,
**dass** die äußeren Umfangskanten davon jeweils kreisförmig kombiniert werden, um einen taschenförmigen Körper auszubilden,
**dass** die innere Stoffbahn (22) durch die Öffnung (16) der hinteren Stoffbahn (14) geführt wird, so dass die innere Stoffbahn (22) mittels Umwenden der vorderen Stoffbahn (12) und der hinteren Stoffbahn (14) ins Innere des taschenförmigen Körpers kommt.

14. Verfahren nach Anspruch 13,
**dadurch gekennzeichnet,**
**dass** die Schritte, in welchen die äußeren Umfangskanten jeweils kreisförmig kombiniert werden und die innere Stoffbahn (22) durch die Öffnung (16) der hinteren Stoffbahn (14) geführt wird, durch den folgenden Schritt ersetzt werden, in welchem die äußeren Umfangskantenabschnitte der vorderen Stoffbahn (12) und der hinteren Stoffbahn (14) jeweils in einem Zustand kombiniert werden, dass sich die Innenflächen der vorderen Stoffbahn (12) und der hinteren Stoffbahn (14) in einer Weise gegenüberliegen, dass die innere Stoffbahn (22) zwischen der vorderen Stoffbahn (12) und der hinteren Stoffbahn (14) angeordnet wird, wenn die vordere Stoffbahn (12) und die hintere Stoffbahn (14) kombiniert werden.

15. Verfahren nach Anspruch 13 oder 14,
**dadurch gekennzeichnet,**
**dass** das Kombinieren von zwei Stoffbahnen (12, 22; 12, 14) durch Nähen durchgeführt wird.

16. Verfahren nach einem der Ansprüche 12-15,
**dadurch gekennzeichnet,**
**dass** das Verfahren derart ausgestaltet wird, dass ein Airbag nach einem der Ansprüche 1-10 hergestellt wird.

## Revendications

1. Coussin gonflable de sécurité comprenant :
un panneau avant (12) disposé sur un côté d'occupant du véhicule ;
un panneau arrière (14) disposé sur un côté opposé au côté d'occupant du véhicule ;
un corps principal de coussin gonflable (10A) formé par des moyens réunissant chacune des parties de bord périphérique du panneau avant (12) et du panneau arrière (14) ; et
un panneau intérieur (22 ; 22A, 22B ; 22A, 22C ; 22D, 22C ; 22E, 22C' ; 22F-J) disposé de façon à diviser un espace à l'intérieur du corps principal de coussin gonflable (10A) en une première chambre (1) comprenant une ouverture (16) pour la pénétration d'un gonfleur (36 ; 36A) prévue dans le panneau arrière (14), et une seconde chambre (2) prévue de façon à entourer la première chambre (1),
dans lequel le panneau intérieur est disposé de telle façon qu'un volume V1 de la première chambre (1) est déterminé pour être plus petit qu'un volume V2 de la seconde chambre (2) lorsque le corps principal de coussin gonflable (10A) est porté à la fin de son développement résultant de l'introduction d'un fluide provenant du gonfleur (36 ; 36A), **caractérisé en ce que** 0,03 <V1/V2 <0,3, et **en ce que** le panneau intérieur est disposé de telle façon que le volume V1 de la première chambre (1) est déterminé pour être plus petit que le volume V2 de la seconde chambre (2) quand une durée non inférieure à 20 ms et ne dépassant pas 40 ms s'est écoulée après que l'allumage du gonfleur (36 ; 36A) est lancé, à la fin du développement du corps principal de coussin gonflable (10A).

2. Coussin gonflable selon la revendication 1, dans lequel le panneau intérieur (22 ; 22A, 22B ; 22A, 22C ; 22D, 22C ; 22E, 22C' ; 22F-J) est disposé de façon à satisfaire à une condition correspondant à 0,05 <V1/V2 <0,25.

3. Coussin gonflable selon la revendication 1 ou 2, dans lequel il est prévu un élément de guidage (60) pour guider le fluide provenant du gonfleur (36) dans la première chambre (1).

4. Coussin gonflable selon l'une quelconque des revendications 1 à 3, dans lequel une partie intérieure de la première chambre (1) est divisée en une petite chambre (91) d'un côté du gonfleur (36) et une grande chambre (92) d'un côté du panneau avant (12) au moyen d'un autre panneau intérieur (90), qui sert d'élément de guidage (60) pour guider le fluide provenant du gonfleur (36) dans la première chambre (1).

5. Coussin gonflable selon l'une quelconque des revendications 1 à 4, dans lequel au moins un trou d'évent (28) est prévu dans le panneau intérieur (22 ; 22A, 22B).

6. Coussin gonflable selon l'une quelconque des revendications 1 à 5, dans lequel le panneau intérieur se compose d'un premier panneau intérieur (22A ; 22D ; 22E) et d'un second panneau intérieur (22B ; 22C ; 22C').

7. Coussin gonflable selon la revendication 6, dans lequel
à la fois le premier panneau intérieur (22A) et le deuxième panneau intérieur (22B) sont munis chacun d'au moins un trou d'évent (28).

8. Coussin gonflable selon la revendication 6 ou 7, dans lequel le second panneau intérieur (22C) est muni d'une partie centrale en forme d'anneau (70) qui chevauche la partie périphérique de l'ouverture (16) du panneau arrière (14),
dans lequel plusieurs parties en forme de sangle (71) font saillie dans une direction radiale à partir d'une périphérie extérieure de la partie centrale (70),
dans lequel une partie de bord périphérique intérieur du premier panneau intérieur (22A) d'un côté de la face avant (12) est cousue à proximité d'un point médian entre un centre et une partie périphérique du panneau avant (12),
dans lequel la partie centrale (70) du deuxième panneau intérieur (22C) est disposée de façon concentrique avec le premier panneau intérieur (22A) et un côté d'extrémité de chacune des parties en forme de sangle (71) est cousu sur une partie de bord périphérique extérieur du premier panneau intérieur (22A).

9. Coussin gonflable selon la revendication 6 ou 7, dans lequel le premier panneau intérieur (22D) est muni d'une partie centrale (80) réunie avec le panneau avant (12),
dans lequel plusieurs parties en forme de ceinture (81) s'étendent à partir de la partie centrale (80),
dans lequel chacune des parties en forme de ceinture (81) est repliée vers le haut vers un panneau arrière (14) à partir de la partie centrale (80) et chaque partie latérale des parties en forme de ceinture (81) avoisinantes l'une de l'autre sont cousues ensemble formant une forme de sac sans fond,
dans lequel le second panneau intérieur (22C) est muni d'une partie centrale en forme d'anneau (70) chevauchant une partie périphérique de l'ouverture (16) du panneau arrière (14),
dans lequel plusieurs parties en forme de sangle (71) font saillie dans une direction radiale à partir d'une périphérie extérieure de la partie centrale (70),
dans lequel le nombre de parties en forme de ceinture (81) du premier panneau intérieur (22D) est égal au nombre des parties en forme de sangle (71) du second panneau intérieur (22C),
dans lequel un côté d'extrémité de chacune des parties en forme de sangle (71) du second panneau intérieur (22C) est cousu sur une partie de côté d'extrémité de chacune des parties en forme de ceinture (81).

10. Coussin gonflable selon la revendication 6 ou 7, dans lequel le premier panneau intérieur (22E) est muni d'une partie de corps principal à forme arrondie (83) réunie avec le panneau avant (12),
dans lequel plusieurs parties en forme de sangle (84) font saillie dans une direction radiale à partir d'une périphérie extérieure de la partie de corps principal (83),
dans lequel le second panneau intérieur (22C') est muni d'une partie centrale en forme d'anneau (70) qui chevauche une partie périphérique de l'ouverture (16) du panneau arrière (14),
dans lequel plusieurs parties en forme de sangle (71') font saillie dans une direction radiale à partir d'une périphérie extérieure de la partie centrale (70),
dans lequel le nombre de parties en forme de sangle (84) du premier panneau intérieur (22E) est égal au nombre de parties en forme de sangle (71') du second panneau intérieur (22C'),
dans lequel chacune des parties en forme de sangle (84) du premier panneau intérieur (22E) est réunie avec une partie correspondante en forme de sangle (71') du second panneau interne (22C').

11. Dispositif formant coussin gonflable de sécurité comprenant :
un gonfleur (36 ; 36A) éjectant un fluide sous pression ; et
un coussin gonflable de sécurité (10 ; 10B1-3 ; 10C ; 10D1-5) selon l'une quelconque des revendications 1 à 10.

12. Procédé de fabrication d'un coussin gonflable de sécurité, comprenant les étapes de :
fourniture d'un panneau avant (12), ;
fourniture d'un panneau arrière (14) ;
formation d'un corps principal de coussin gonflable (10A) en réunissant des parties de bord périphérique du panneau avant (12) et du panneau arrière (14) ; et
disposition d'un panneau intérieur (22 ; 22A, 22B ; 22A, 22C ; 22D, 22C ; 22E, 22C' ; 22F-J) de façon à diviser un espace à l'intérieur du corps principal de coussin gonflable (10A) en une première chambre (1) comprenant une ouverture (16) pour la pénétration d'un gonfleur (36 ; 36A) à fournir dans le panneau arrière (14), et une seconde chambre (2) prévue de façon à entourer la première chambre (1),
dans lequel le panneau intérieur (22 ; 22A, 22B ; 22A, 22C ; 22D, 22C ; 22E, 22C' ; 22F-J) est disposé de telle façon qu'un volume V1 de la première chambre (1) est déterminé pour être plus petit qu'un volume V2 de la seconde chambre (2) lorsque le corps principal de coussin gonflable (10A) est mené à son terme de développement résultant de l'introduction d'un fluide provenant du gonfleur (36 ; 36A), **caractérisé en ce que** 0,03 <V1/V2 <0,3, et **en ce que** le panneau intérieur est disposé de telle façon que le volume V1 de la première chambre (1) est déterminé pour être plus petit que le volume V2 de la seconde chambre (2) quand une durée non inférieure à 20 ms et ne dépassant pas 40 ms s'est écoulée après que l'allumage du gonfleur (36 ; 36A) est lancé, à la fin du développement du corps principal de coussin gonflable (10A).

13. Procédé selon la revendication 12,
dans lequel le panneau intérieur (22) est chevauché de façon concentrique avec une face intérieure du panneau avant (12),
dans lequel une partie de bord périphérique externe du panneau intérieur (22) est réunie de façon circulaire à proximité d'un point médian entre la partie de bord périphérique et le centre du panneau avant (12),
dans lequel les faces extérieures du panneau avant (12) et du panneau arrière (14) sont mises en chevauchement de façon à faire face l'une à l'autre,
dans lequel chacun des bords périphériques externes de celui-ci sont réunis de façon circulaire pour former un corps en forme de sac,
dans lequel le panneau intérieur (22) est passé à travers l'ouverture (16) du panneau arrière (14) de sorte que le panneau intérieur (22) vient à l'intérieur du corps en forme de sac grâce à l'inversion du panneau avant (12) et du panneau arrière (14).

14. Procédé selon la revendication 13,
dans lequel les étapes où chacun des bords périphériques externes est réuni de façon circulaire et le panneau intérieur (22) est passé à travers l'ouverture (16) du panneau arrière (14) sont remplacées par l'étape suivante dans laquelle chacune des parties de bord extérieur périphérique du panneau avant (12) et du panneau arrière (14) sont réunies entre elles dans un état tel que les faces intérieures du panneau avant (12) et du panneau arrière (14) se font face de sorte que le panneau intérieur (22) est pris en sandwich entre le panneau avant (12) et le panneau arrière (14) lors de la réunion du panneau avant (12) et du panneau arrière (14).

15. Procédé selon la revendication 13 ou 14,
dans lequel la réunion de deux panneaux (12, 22 ; 12, 14) est réalisée par couture.

16. Procédé selon l'une quelconque des revendications 12 à 15,
dans lequel le procédé est adapté à la fabrication d'un coussin gonflable de sécurité tel que défini dans les revendications 1 à 10.
